# EUROPEAN PATENT APPLICATION

(11) **EP 1 612 408 A1**
(43) Date of publication of application: **04.01.2006**
(21) Application number: 05011948.6
(22) Date of filing: 02.06.2005
(51) Int. Cl.: F02N 11/08

(54) **Vehicle control system**

(30) Priority: 28.06.2004 JP 2004189555; 29.10.2004 JP 2004316595
(71) Applicant: Mazda Motor Corporation, Aki-gun, Hiroshima 730-8670 (JP)
(72) Inventor: Masukawa, Kazuma, Aki-gun Hiroshima 730-8670 (JP); Inada, Norichika, Aki-gun Hiroshima 730-8670 (JP); Sakaedani, Akira, Aki-gun Hiroshima 730-8670 (JP)
(74) Representative: Müller-Boré & Partner Patentanwälte

(57) **Abstract**

Disclosed is a vehicle control system, which comprises idling stop control means for automatically stopping and starting an engine upon satisfaction of given conditions, receiving means for receiving door-lock and door-unlock signals from a portable radiowave transmitting key, door lock means for locking and unlocking a door in response to the received signals, and vehicle-start-intent detecting means for detecting a signal based on a driver's intent to start the vehicle except for the door-unlock signal. The idling stop control means is operable to automatically stop the engine in accordance with the door-lock signal, and to automatically start said engine when the vehicle-start-intent detecting means detects the vehicle-start-intent-based signal. The vehicle control system with the idling stop control function can automatically stop and start the engine in an effective manner to achieve improvement in fuel economy and reduction in emissions/noise.

## Description

### FIELD OF THE INVENTION

The present invention relates to a vehicle control system, and more particularly to the field of environmental/low-emission technologies for vehicles.

### BACKGROUND ART

Generally, there has been widely known an engine idling stop control for providing improved fuel economy, lowered emissions and reduced noise/vibration. The idling stop control is typically designed to automatically stop an engine in response to depressing a brake pedal when a vehicle speed is approximately zero during wait at stoplights or traffic jam, and then automatically restart the engine in response to releasing the depression of the brake pedal.

In late years, the widespread use of mail-order services and consumer cooperatives has brought about the situation where delivery service vehicles are frequently driven into satellite towns and residential areas. In such a delivery service vehicle, a relatively long time can be necessary to carry a pack to a customer after a driver temporarily parks the vehicle. If an engine of the vehicle can be automatically stopped while a driver gets out of the vehicle (during absence of a driver), the advantages of the idling stop control, such as improvement in fuel economy and reduction in emissions/noise, will be fully utilized.

In the delivery service vehicle, it is often the case that a driver has to hold a pack and get out of the vehicle. Moreover, the driver frequently has to get out of and on the vehicle. In these situations, the driver is apt to feel burdensome to conduct an operation for putting/pulling an ignition key in/out of a key cylinder, or a push-"off" operation for manually stopping an engine in an engine start/stop button (The engine start/stop button is equivalent to "manual engine-start/stop operation means" set forth in the appended claim 9. For example, the engine start/stop button is designed to manually start an engine when being turned "on" in response to a pushing operation, and to manually stop the engine when being turned "off" in response to a subsequent re-pushing operation). The following Patent Publication 1 (Japanese Patent Laid-Open Publication No. 08-061194) discloses one technique for coping with this problem. Specifically, this technique employs a radiowave transmitting key adapted to be used in a portable manner by a driver in addition to an ignition key, and utilizes door-lock and door-unlock signals from the radiowave transmitting key to automatically stop and start an engine in synchronization therewith. According to this technique, a driver can get out of the vehicle without turning the ignition key off or performing the push-"off" operation for stopping the engine, and use the radiowave transmitting key to lock doors and stop the engine. Subsequently, the driver can use the radiowave transmitting key to unlock the doors and automatically start the engine without operating the ignition key or performing the push-"on" operation for starting the engine.

### SUMMARY OF THE INVENTION

However, in the above automatic engine stop/start control designed to be performed in conjunction with the door lock/unlock control in response to the door-lock/door-unlock signals from the radiowave transmitting key, even if the driver gets back to the vehicle, for example, simply to pick up another pack, or the driver has no intent to start the vehicle, the engine will be automatically started in response to receiving the door-unlock signal. This causes the problem that the improvement in fuel economy and reduction in emissions/noise cannot be effectively achieved.

It is therefore an object of the present invention to provide a vehicle control system capable of effectively performing an automatic engine stop/start control to achieve improved fuel economy and reduced emissions/noise.

Further, in the above automatic engine stop/start control designed to be performed in conjunction with the door lock/unlock control in response to the door-lock/door-unlock signals from the radiowave transmitting key, if the driver erroneously transmits the door-lock signal from the radiowave transmitting key, for example, during driving after riding on the vehicle, the engine will be automatically stopped. Moreover, if the driver erroneously transmits the door-unlock signal from the radiowave transmitting key, for example, during driving after riding on the vehicle, the doors will be unlocked according to the original function of the radiowave transmitting key.

As the radiowave transmitting key to be used in the above system, there have been known one type (manual transmit type) designed to transmit door-lock and door unlock signals to a vehicle-mounted transceiver device according to a button operation to be manually performed by a driver or other occupant, and another type (automatic transmit type) designed to automatically transmit a personal authentication code to a vehicle-mounted transceiver device in response to a request signal to be automatically transmitted from the transceiver device in even periods. Particularly, in the latter type, when the radiowave transmitting key is located within a given distance from the vehicle, the signal communication is automatically performed between the radiowave transmitting key and the transceiver device. Thus, depending on an authentication result, such as erroneous authentication of an authentication code signal during the communication, even if the driver does not make any erroneous operation, the engine is automatically stopped in an abrupt way during vehicle driving (in other words, the engine cannot be started), or the doors is locked or unlocked (in other words, the doors cannot be unlocked or locked)

It is therefore another object of the present invention to provide a vehicle control system capable of avoiding the above problem in the conventional automatic engine stop/start control designed to be performed in conjunction with the door lock/unlock control in response to the door-lock/door-unlock signals from the radiowave transmitting key, or the problem about improper door lock/unlock and automatic engine stop.

In order to achieve the above objects, according to an aspect of the present invention, there is provided a vehicle control system which includes: idling stop control means for automatically stopping an engine of a vehicle when a given automatic engine stop condition is satisfied, and then automatically starting the engine when a given automatic engine start condition is satisfied; receiving means for receiving a door-lock signal and a door-unlock signal from a radiowave transmitting key adapted to be used in a portable manner by a driver; and door lock means for locking and unlocking a door of the vehicle, in response, respectively, to the door-lock and door-unlock signals received by the receiving means. The vehicle control system comprises vehicle-start-intent detecting means for detecting a signal based on a driver's intent to start the vehicle except for the door-unlock signal received from the radiowave transmitting key in a period where the engine is automatically stopped by the idling stop control means. In this vehicle control system, the idling stop control means is operable to automatically stop the engine in accordance with the door-lock signal from the radiowave transmitting key, and to automatically start the engine when the vehicle-start-intent detecting means detects the vehicle-start-intent-based signal.

In the above vehicle control system, for example, when a driver of a vehicle, such as a delivery vehicle carries a pack to a customer, the driver can get out of the vehicle without an operation for turning off the engine, and simply transmit the door-lock signal from the radiowave transmitting key to lock the door and automatically stop the engine. This makes it possible to provide a higher level of convenience and achieve improved fuel economy, lowered emissions and reduced noise/vibration based on the idling stop control. Further, even if the driver tries to unlock the door in accordance with the door-unlock signal from the radiowave transmitting key when he/she gets back to the vehicle after the delivery, the above vehicle control system is designed such that the engine cannot be automatically started only by the door-unlock signal from the radiowave transmitting key. The reason is that the driver can get back to the vehicle without intent to start the vehicle, for example, simply to pick up another pack. Thus, the above vehicle control system is designed to continue the automatic engine stop state regardless of receiving the door-unlock signal from the radiowave transmitting key so as to achieve improvement in fuel economy and other effects. In addition, the above vehicle control system is designed to allow the engine to be automatically started only after detection of the signal representing a driver's intent to start the vehicle except for the door-unlock signal from the radiowave transmitting key. This makes it possible to reliably synchronize the vehicle-start intent with the release of the automatic engine stop state. The signal representing the driver's intent to start the vehicle may include an ON signal of a brake pedal switch, an ON signal of a seat belt switch, and a brake release signal.

These and other objects, features, and advantages of the present invention will become apparent upon reading the following detailed description along with the accompanied drawings.

### BRIEF DESCRIPTION OF DRAWINGS

FIG. 1 is a block diagram showing a vehicle control system according to a first embodiment of the present invention.
FIG. 2 is a schematic diagram showing a layout around an instrument panel in front of a driver's seat of a vehicle in the first embodiment.
FIG 3 is a flowchart showing a first idling stop control for the vehicle.
FIG. 4 is a flowchart showing a second idling stop control for the vehicle.
FIG 5 is a flowchart showing a part of the second idling stop control.
FIG. 6 is a block diagram showing a vehicle control system according to a second embodiment of the present invention.
FIG 7 is a flowchart showing a first idling stop control for a vehicle in the second embodiment.
FIG 8 is a flowchart showing a second idling stop control for the vehicle.
FIG 9 is a flowchart showing a part of the second idling stop control.
FIG 10 is a block diagram showing a vehicle control system according to a third embodiment of the present invention.
FIG 11 is a block diagram showing an electric system of a vehicle in the third embodiment.
FIG 12 is a flowchart showing a first idling stop control for the vehicle.
FIG 13 is a flowchart showing a second idling stop control for the vehicle.
FIG 14 is a flowchart showing a part of the second idling stop control.
FIG 15 is a flowchart showing a third idling stop control for the vehicle.
FIG.16 is a flowchart showing a part of the third idling stop control.
FIG 17 is a flowchart showing a setting control of a permission flag Fx in the vehicle.
FIG 18 is a flowchart showing a permission/prohibition control to be performed by a keyless entry unit based on the permission flag Fx.
FIG 19 is a time chart showing changes in the permission flag Fx.
FIG 20 is a block diagram showing a vehicle control system according to a fourth embodiment of the present invention.
FIG 21 is a block diagram showing an electric system of a vehicle in the fourth embodiment.
FIG 22 is a flowchart showing a first idling stop control for the vehicle.
FIG 23 is a flowchart showing a setting control of a permission flag Fy in the vehicle.
FIG 24 is a flowchart showing a permission/prohibition control to be performed based on the permission flag Fy by a receiving device for receiving a signal from a radiowave transmitting key.
FIG 25 is a time chart showing changes in the permission flag Fy.

### DETAILED DESCRIPTION OF THE INVENTION:

An embodiment according to the present invention will now be described.

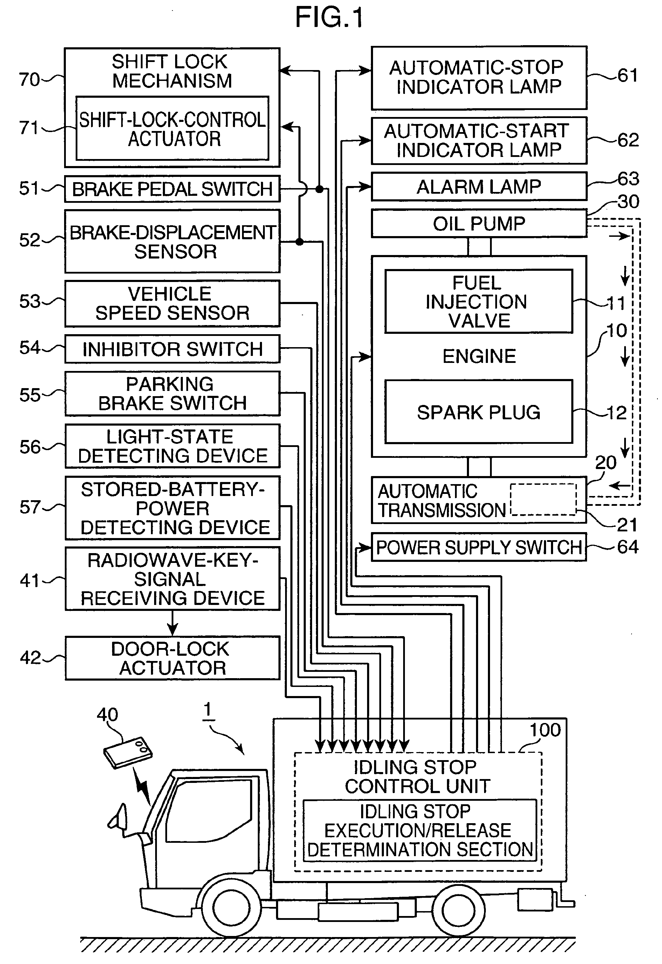

In FIG 1 illustrating a vehicle control system according to a first embodiment of the present invention, a vehicle 1 is a commercial truck for use in a delivery service. The vehicle 1 comprises an engine 10 serving as a power or driving source, and an automatic transmission 20 for changing the speed of an output rotation from the engine 10 and outputting the changed rotation to drive wheels. The automatic transmission 20 is provided with a plurality of hydraulically-actuated friction elements 21, such as clutch elements and brake elements, and adapted to selectively actuate the friction elements 21 so as to connect and switch between power transmission lines in a transmission gear mechanism composed, for example, of a planetary gear mechanism, to achieve 4-speed forward/1-speed reverse. The vehicle 1 also includes an oil pump 30 for generating a hydraulic oil pressure for the hydraulically-actuated friction elements 21. The oil pump 30 is a mechanical type designed to be driven by the output rotation from the engine 10 so as to discharge hydraulic oil. In conjunction with stop of the engine 10, the oil pump 30 also stops generating the oil pressure.

In addition to an ignition key, the vehicle 1 is equipped with a radiowave transmitting key (or an electric wave transmitting key) 40 adapted to be used in a portable manner by a driver (hereinafter referred to as "radiowave key" for brevity), and to transmit an door-lock signal and a door-unlock signal through an switch operation. The vehicle 1 includes a receiving device 41 for receiving the door-lock and door-unlock signals from the radiowave key (radiowave-key-signal receiving device), and a door-lock actuator 42 for controllably locking and unlocking one or more doors of the vehicle in accordance with the door-lock and door-unlock signals received by the radiowave-key-signal receiving device 41. The vehicle control system may also be designed to automatically stop and start the engine 10 in accordance with the door-lock and door-unlock signals, independently of a state of an ignition switch. The radiowave key 40 is not limited to the switch operation type, but may be any other suitable type, such as the so-called smart card or key in a smart keyless entry system in which a receiving device receives a signal transmitted from the smart key and measures the intensity of the received signal to execute a door lock/unlock control in accordance with the measured intensity.

The vehicle 1 includes a control unit 100 for an idling stop control (idling stop control unit). This control unit 100 has an idling stop execution/release determination section adapted to receive various signals, such as: a signal from a brake pedal switch 51 designed to be turned on when a brake pedal is depressed; a signal from a brake-displacement sensor 52 for detecting a displacement (depressed amount) of the brake pedal; a signal from a vehicle speed sensor 53 for detecting a speed of the vehicle 1; a signal from an inhibitor switch 54 designed to be turned on when a shift lever is set in a parking (P) range; a signal from a parking brake switch designed to be turned on during use of a parking brake (hand brake); a signal from a light-state detecting device 56 for detecting ON and OFF states in each of plural types of lights of the vehicle 1; a signal from a stored battery power detecting device 57 for measuring a voltage and/or current of an in-vehicle battery of the vehicle 1 to detect a stored power of the battery; and a signal from the radiowave-key-signal receiving device 41 adapted to receive the door-lock and door-unlock signals from the radiowave key 40 and control the door-lock actuator 42 disposed in the door to lock and unlock the door. Note that the control unit 100 includes a vehicle start intent detecting means for detecting a signal from the brake-displacement sensor 52. In addition, the control unit 100 includes detection means for detecting each of the signals generated by all those elements 70, 71, 51, 52, 53, 54, 55, 56, 57, 41, shown in Fig 1 with arrows going into the control unit 100.

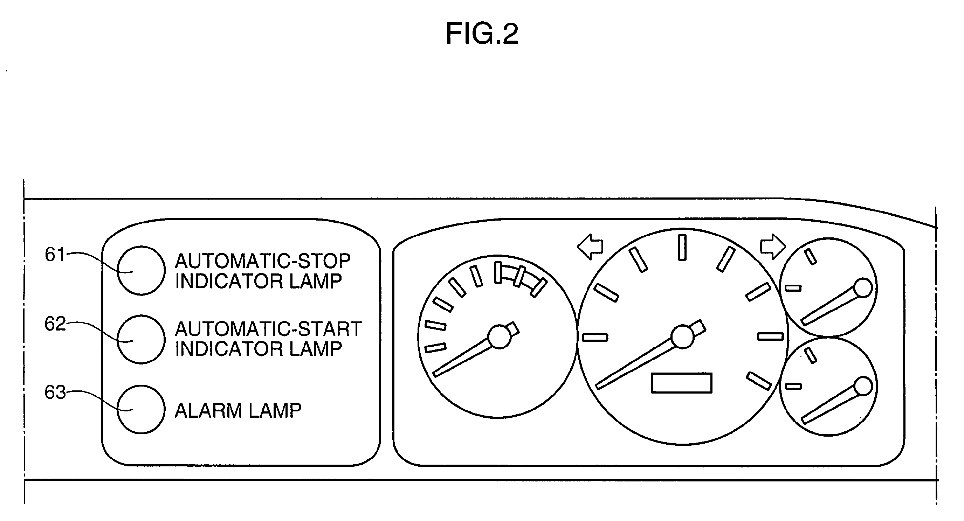

As shown in FIG. 2, an instrument panel in front of a drover's seat of the vehicle is provided with an automatic-stop indicator lamp 61, an automatic-start indicator lamp 62 and an alarm lamp 63 in parallel with a speedometer, a tachometer and other indicators. The idling-stop indicator lamp 61 is designed to be turned on during the period where the engine 10 is automatically stopped, so as to inform the driver that the engine is in the automatic engine stop state. The automatic-start indicator lamp 62 is designed to be temporarily turned on only when the engine 10 is automatically started, so as to inform the driver that the engine 10 is being automatically started. The alarm lamp 63 is designed to be turned on when the idling stop control cannot be executed due to the state of the battery, so as to inform the driver of the fact. Further, as shown in FIG. 1, the vehicle 1 is provided with a power supply switch 64 for turning on/off an accessory, such as an audio device, a power window device or a motor in a standby state.

The control unit 100 is operable to execute the idling stop control in accordance with the above switches and sensors, and send an idling stop control signal to each of plural fuel injection valves 11 and plural spark plugs 12 in the engine 10, the automatic-stop indicator lamp 61, the automatic-start indicator lamp 63, and the power supply switch 64.

The vehicle 1 further includes a shift lock mechanism 70. The shift lock mechanism 70 is provides as a means to prevent the shift lever in the P range from being manually shifted to one of the remaining ranges (e.g. the running range, such as D range). For this purpose, the shift lock mechanism 70 has an actuator (solenoid-type actuator) 71 adapted to retractably protrude a shift-blocking member, such as a pin, into a shifting path of the shift lever. The shift lock mechanism 70 is operable to set a shift lock state (project the pin) or release the shift lock state (retract the pin) in accordance with an ON signal of the brake pedal switch 51 and the displacement signal of the brake-displacement sensor 52 which are sent to the shift-lock control actuator 71. Specifically, as long as the ON signal representing that the brake pedal is effectively operated or depressed, and the displacement signal representing that the brake pedal is effectively operated or depressed in a specified (predetermined) value a or more, are generated, respectively, from the brake pedal switch 51 and the brake-displacement sensor 52, the shift lock state and/or the automatic engine stop state are released. Under other conditions, the shift lock process is executed, and the automatic engine stop state is continued.

If the shift lock mechanism is a mechanical type (cable type etc.), there is no connection between the shift lock mechanism and the brake pedal switch. In this case, the shift lock state and/or the automatic engine stop state are released when a brake displacement becomes equal to or greater than a specified value determined to release the shift lock state thereat. This is done to correlate the detection of a driver's intent to release the shift lock state with the release of the automatic engine stop state.

The brake-displacement sensor 52 may be any type of sensor for detecting a parameter reflecting the level of depression in the brake pedal, for example, a brake-fluid pressure sensor for detecting a pressure of brake fluid, or a stroke sensor for detecting a stroke of the brake pedal.

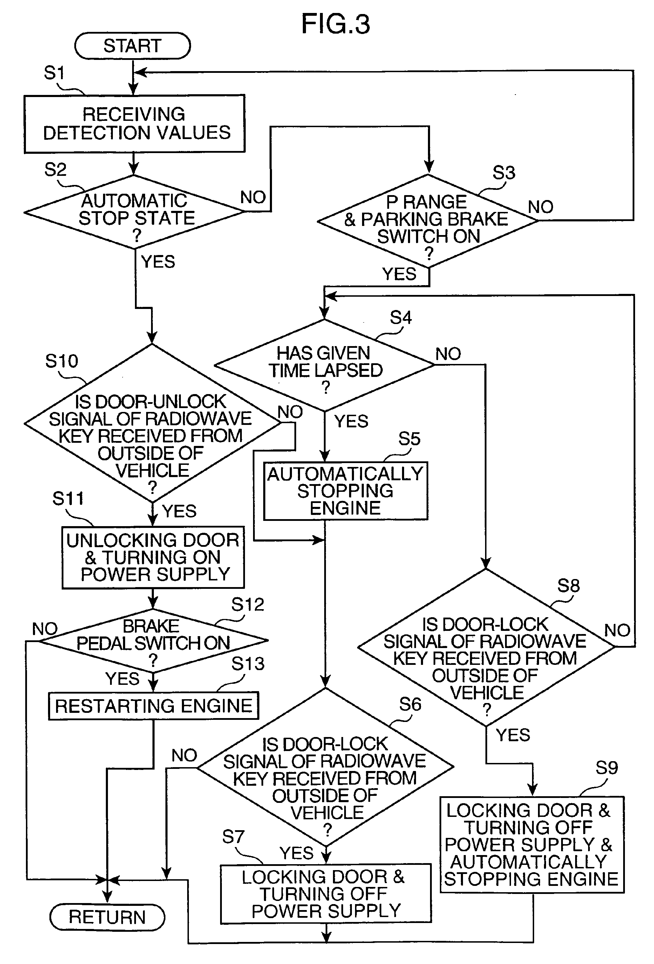

With reference to the flowchart illustrated in FIG. 3, a first idling stop control to be executed by the idling stop control unit 100 will be described below.

The control unit 100 first receives each detection value from the aforementioned sensors and switches, in Step S1, and then determines whether the engine is in the automatic engine stop state, in Step S2. When the determination in Step S2 is NO or it is determined that the engine is not in the automatic engine stop state, the process advances to Step S3 for determining whether the shift lever and the parking brake switch are, respectively, in the P range and in the ON state. When the determination in Step S3 is YES or it is determined that the shift lever is in the P range and the parking brake switch is in the ON state, the process advances to Step S4. If these conditions are not satisfied in Step S3, the process will returns to Step S1. In Step S4, it is determined whether a given time has lapsed. When it is determined that the given time has lapsed, the process advances to Step S5 for executing the automatic engine stop process to automatically stop the engine. Then, in Step S6, it is determined whether the door-lock signal of the radiowave key 40 is received from the outside of the vehicle. If the radiowave key 40 is the aforementioned smart key, the determination of receiving of the door-lock signal will be made at the time when a signal intensity received from the smart key is reduced to a specified value or less. When the determination in Step S6 is YES or it is determined that the door-lock signal is received, the door and the power supply switch 64 are, respectively, locked and turned off in Step S7, and then the process returns to a start of the process. If the determination in Step S6 is NO or it is determined that the door-lock signal is not received, the process will returns directly to the start without locking the door, because of the possibility that an occupant remains in the vehicle.

When the determination in Step S4 is NO or it is determined that the given time has not lapsed, the process advances to Step S8 for determining whether the door-lock signal of the radiowave key 40 is received from the outside of the vehicle. When the determination in Step S8 is YES or it is determined that the door-lock signal is received, the process advances to Step S9 for locking the door, turning off the power supply switch 64 and automatically stopping the engine 10 (automatic engine stop process), and then returns to the start. If the determination in Step S8 is NO or it is determined that the door-lock signal is not received, the process will return to Step S4.

When the determination in Step S2 is YES or it is determined that the engine is in the automatic engine stop state, the process advances to Step S 10 for determining whether the door-unlock signal of the radiowave key 40 is received from the outside of the vehicle. If the radiowave key 40 is the smart key, the determination of receiving of the door-unlock signal will be made at the time when a signal intensity received from the smart key is increased up to a specified value or more. When the determination in Step S10 is YES or it is determined that the door-unlock signal is received, the door and the power supply switch 64 are, respectively, unlocked and turned on in Step S11. Then, in Step S12, it is determined whether the brake pedal is effectively operated. The effective operation of the brake pedal is considered as a driver's intent to release the shift lock state so as to start the vehicle (driver's vehicle-start intent). When the determination in Step S12 is YES or it is determined that the brake pedal is effectively operated, the engine 10 is automatically started (automatic engine start process) in Step S13. If the determination in Step S12 is NO or it is determined that the brake pedal is not effectively operated, the process will returns directly to the start without automatically starting the engine 10. In addition, if the determination in Step S10 is NO or it is determined whether the door-unlock signal of the radiowave key 40 is not received from the outside of the vehicle, the process will advance to Step S6.

While the driver's vehicle-start intent in Step S12 is detected based on the effective operation of the brake pedal, the detection of the driver's vehicle-start intent is not limited to such a manner. For example, the driver's vehicle-start intent may be detected based on a driver's action of wearing or attaching a seatbelt, or may be detected based on a signal representing the release of the parking brake (parking-brake release signal).

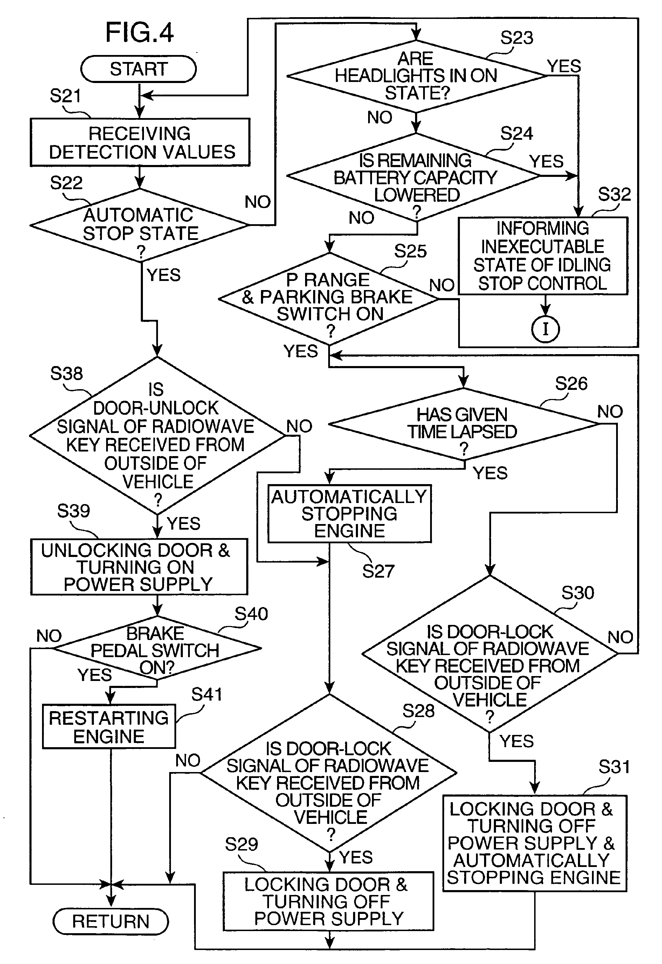

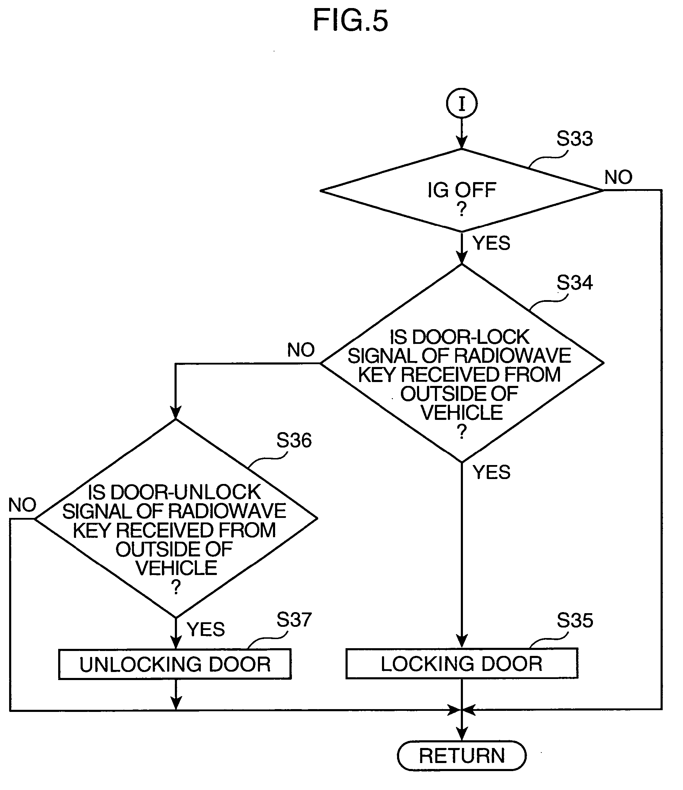

With reference to the flowcharts illustrated in FIGS. 4 and 5, a second idling stop control will be described below.

The control unit 100 first receives each detection value from the aforementioned sensors and switches, in Step S21, and then determines whether the engine is in the automatic engine stop state, in Step S22. When the determination in Step S22 is NO or it is determined that the engine is not in the automatic engine stop state, the process advances to Step S23 for determining whether headlights are in an ON state. When the determination in Step S23 is NO or it is determined that the headlights are not in the ON state, it is determined whether a remaining battery capacity (stored battery capacity) is equal to or less than a specified value, in Step S24. Then, when the determination in Step S24 is NO or it is determined that the remaining battery capacity is greater than the specified value, the process advances to Step S25 for determining whether the shift lever and the parking brake switch are, respectively, in the P range and in the ON state. When the determination in Step S25 is YES or it is determine that the shift lever and the parking brake switch are, respectively, in the P range and in the ON state, the process advances to Step S26. If the determination in Step S25 is NO or it is determine that these conditions are not satisfied, the process will return to Step S21. In Step S26, it is determined whether a given time has lapsed. When it is determined that the given time has lapsed, the process advances to Step S27 for executing the automatic engine stop process to automatically stop the engine. Then, in Step S28, it is determined whether the door-lock signal of the radiowave key is received from the outside of the vehicle. When the determination in Step S28 is YES or it is determined that the door-lock signal is received, the door and the power supply switch are, respectively, locked and turned off in Step S29, and then the process returns to the start. If the determination in Step S28 is NO or it is determined that the door-lock signal is not received, the process will returns directly to the start.

When the determination in Step S26 is NO or it is determined that the given time has not lapsed, the process advances to Step S30 for determining whether the door-lock signal of the radiowave key 40 is received from the outside of the vehicle. When the determination in Step S30 is YES or it is determined that the door-lock signal is received, the process advances to Step S31 for locking the door, turning off the power supply switch and automatically stopping the engine (automatic engine stop process), and then returns to the start. If the determination in Step S31 is NO or it is determined that the door-lock signal is not received, the process will return to Step S26.

When the determination in Step S23 is YES or it is determined that the headlights are in the ON state, or when the determination in Step S24 is YES or it is determined that the remaining battery capacity is equal to or less than the specified value, the process advances to Step S32 for informing the driver that the idling stop control is inexecutable, by turning on the alarm lamp 63 together with an audio or voice message. Then, in Step S33, it is determined whether the ignition key is in an OFF state. If the determination in Step S33 is NO or it is determined that the ignition key is in an ON state, the process will return directly to the start. When the determination in Step S33 is YES or it is determined that the ignition key is in the OFF state, the process advances to Step S34 for determining whether the door-lock signal of the radiowave key 40 is received from the outside of the vehicle. When the determination in Step S34 is YES or it is determined that the door-lock signal is received, the process advances to Step S35 for locking the door, and then returns to the start. When the determination in Step S35 is NO or it is determined that the door-lock signal is not received, the process advances to Step S36 for determining whether the door-unlock signal of the radiowave key is received from the outside of the vehicle. When the determination in Step S36 is YES or it is determined that the door-unlock signal is received, the process advances to Step 37 for unlocking the door, and then returns to the start. If the determination in Step S36 is NO or it is determined that the door-unlock signal is not received, the process will return directly to the start.

When the determination in Step S22 is YES or it is determined that the engine is in the automatic engine stop state, the process advances to Step S38 for determining whether the door-unlock signal of the radiowave key 40 is received from the outside of the vehicle. When the determination in Step S38 is YES or it is determined that the door-unlock signal is received, the door and the power supply switch 64 are, respectively, unlocked and turned on in Step S39. Then, in Step S40, it is determined whether the brake pedal is effectively operated. The effective operation of the brake pedal is considered as the driver's intent to release the shift lock state so as to start the vehicle. When the determination in Step S40 is YES or it is determined that the brake pedal is effectively operated, the engine 10 is automatically started in Step S41. If the determination in Step S40 is NO or it is determined that the brake pedal is not effectively operated, the process will returns directly to the start without automatically starting the engine 10. In addition, if the determination in Step S38 is NO or it is determined whether the door-unlock signal of the radiowave key 40 is not received from the outside of the vehicle, the process will advance to Step S28.

A second embodiment of the present invention will be described below.

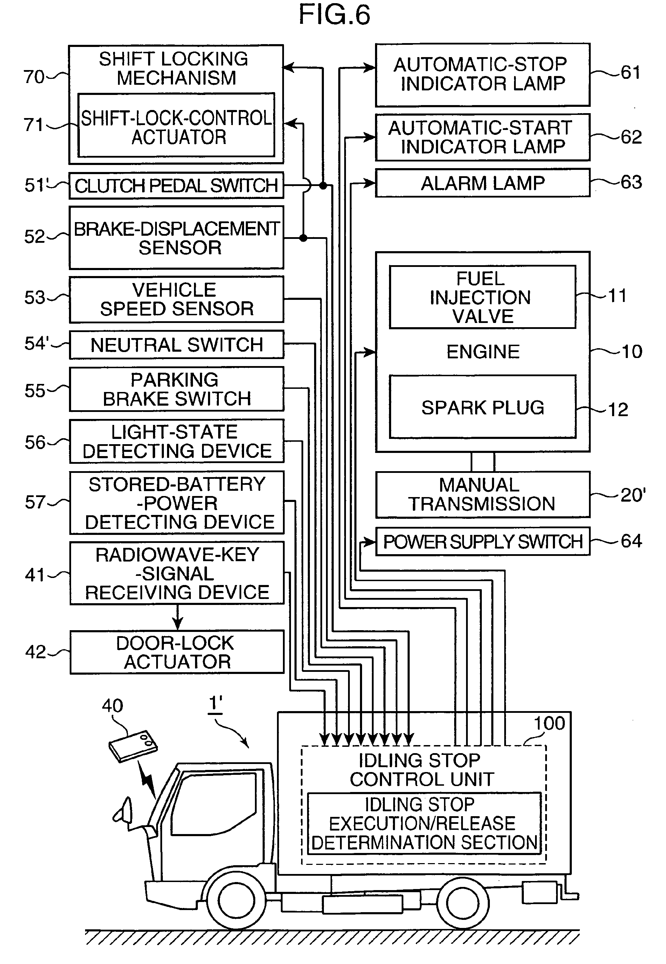

As shown in FIG 6, a vehicle 1' in the second embodiment is a delivery vehicle equipped with a manual transmission 20'. Except that the automatic transmission 20, the brake-pedal switch 51, and the inhibitor switch 54 of the vehicle 1 in the first embodiment are replaced, respectively, with the manual transmission 20', a clutch pedal switch 51', and a neutral switch 54' of the vehicle 1' in the second embodiment is structurally the same as the vehicle 1 in the first embodiment. Thus, the common component or element is defined by the same reference numeral. The clutch pedal switch 51' is designed to be turned on when a clutch is depressed, to detect the driver's vehicle-start intent. Note that the control unit 100 includes a vehicle start intent detecting means for detecting a signal from the clutch pedal switch 51'. In addition, the control unit 100 includes detection means for detecting each of the signals generated by all those elements 70, 71, 51', 52, 53, 54', 55, 56, 57, 41, shown in Fig 6, with arrows going into the control unit 100.

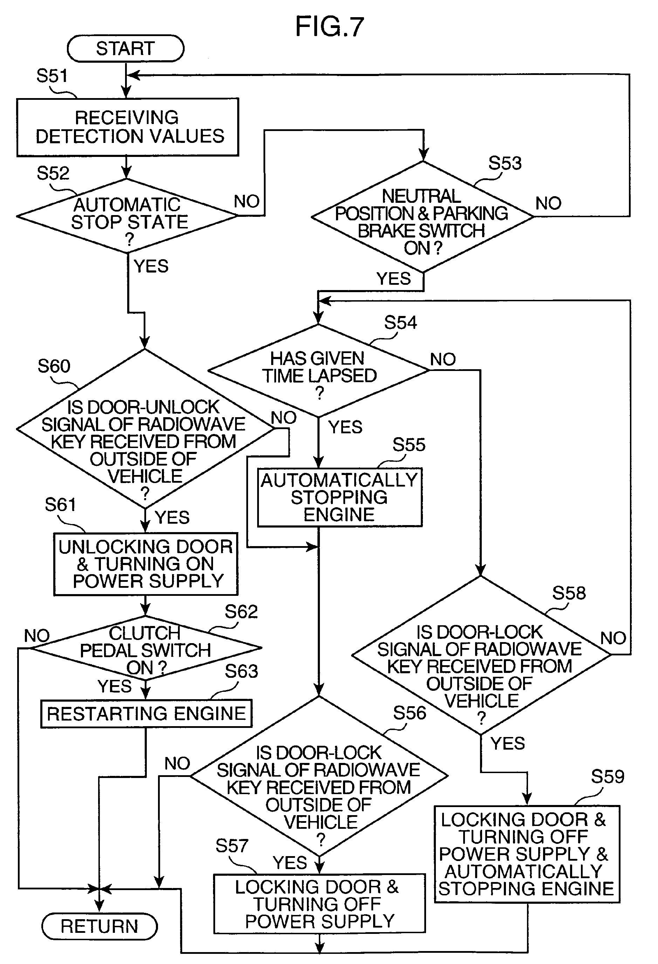

With reference to the flowchart illustrated in FIG 7, a first idling stop control to be executed by the idling stop control unit 100 will be described below.

The control unit 100 first receives each detection value from the aforementioned sensors and switches, in Step S51, and then determines whether the engine is in the automatic engine stop state, in Step S52. When the determination in Step S52 is NO or it is determined that the engine is not in the automatic engine stop state, the process advances to Step S53 for determining whether the shift lever and the parking brake switch are, respectively, in a neutral position and in the ON state. When the determination in Step S53 is YES or it is determined that the shift lever is in the neutral position and the parking brake switch is in the ON state, the process advances to Step S54. If these conditions are not satisfied in Step S53, the process will returns to Step S51. In Step S54, it is determined whether a given time has lapsed. When it is determined that the given time has lapsed, the process advances to Step S55 for executing the automatic engine stop process to automatically stop the engine. Then, in Step S56, it is determined whether the door-lock signal of the radiowave key 40 is received from the outside of the vehicle. If the radiowave key 40 is the aforementioned smart key, the determination of receiving of the door-lock signal will be made at the time when a signal intensity received from the smart key is reduced to a specified value or less. When the determination in Step S56 is YES or it is determined that the door-lock signal is received, the door and the power supply switch 64 are, respectively, locked and turned off in Step S57, and then the process returns to the start. If the determination in Step S56 is NO or it is determined that the door-lock signal is not received, the process will returns directly to the start without locking the door, because of the possibility that an occupant remains in the vehicle.

When the determination in Step S54 is NO or it is determined that the given time has not lapsed, the process advances to Step S58 for determining whether the door-lock signal of the radiowave key 40 is received from the outside of the vehicle. When the determination in Step S58 is YES or it is determined that the door-lock signal is received, the process advances to Step S59 for locking the door, turning off the power supply switch 64 and automatically stopping the engine 10 (automatic engine stop process), and then returns to the start. If the determination in Step S58 is NO or it is determined that the door-lock signal is not received, the process will return to Step S54.

When the determination in Step S52 is YES or it is determined that the engine is in the automatic engine stop state, the process advances to Step S60 for determining whether the door-unlock signal of the radiowave key 40 is received from the outside of the vehicle. If the radiowave key 40 is the smart key, the determination of receiving of the door-unlock signal will be made at the time when a signal intensity received from the smart key is increased up to a specified value or more. When the determination in Step S60 is YES or it is determined that the door-unlock signal is received, the door and the power supply switch 64 are, respectively, unlocked and turned on in Step S61. Then, in Step S62, it is determined whether the clutch pedal switch 51' is turned on. The turning-on of the clutch pedal switch 51' is considered as the driver's vehicle-start intent. When the determination in Step S62 is YES or it is determined that the clutch pedal switch is turned on, the engine 10 is automatically started (automatic engine start process) in Step S63. If the determination in Step S62 is NO or it is determined that the clutch pedal switch is not turned on, the process will returns directly to the start without automatically starting the engine 10. In addition, if the determination in Step S60 is NO or it is determined whether the door-unlock signal of the radiowave key 40 is not received from the outside of the vehicle, the process will advance to Step S56.

While the driver's vehicle-start intent in Step S62 is detected based on the operation of the clutch pedal (ON state of the clutch pedal switch), the detection of the driver's vehicle-start intent it is not limited to such a manner. For example, the driver's vehicle-start intent may be detected based on a driver's action of wearing or attaching a seatbelt, or may be detected based on a signal representing the release of the parking brake (parking-brake release signal).

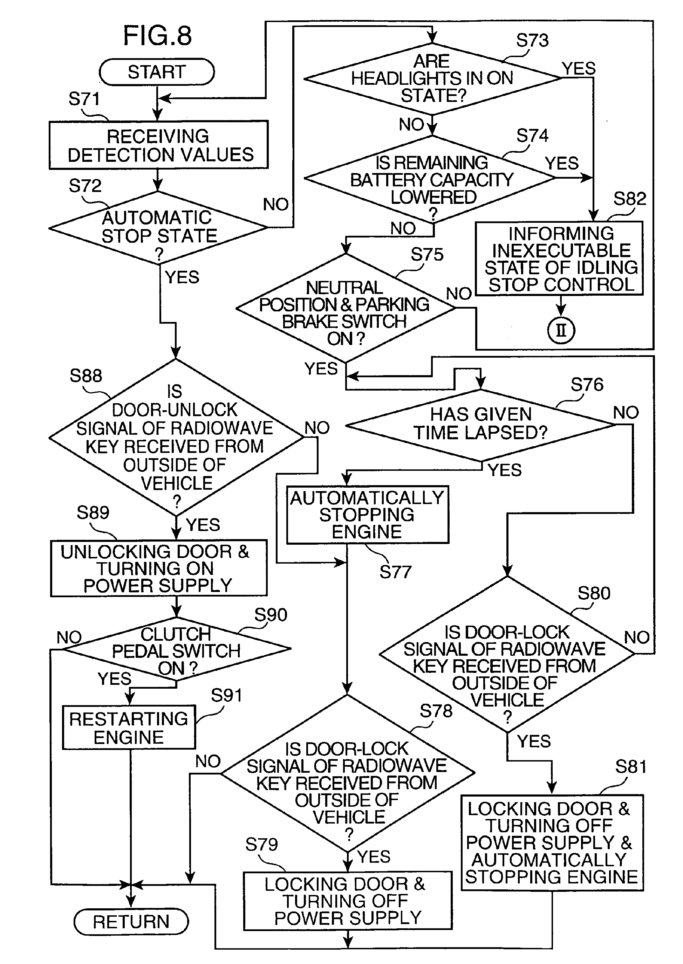

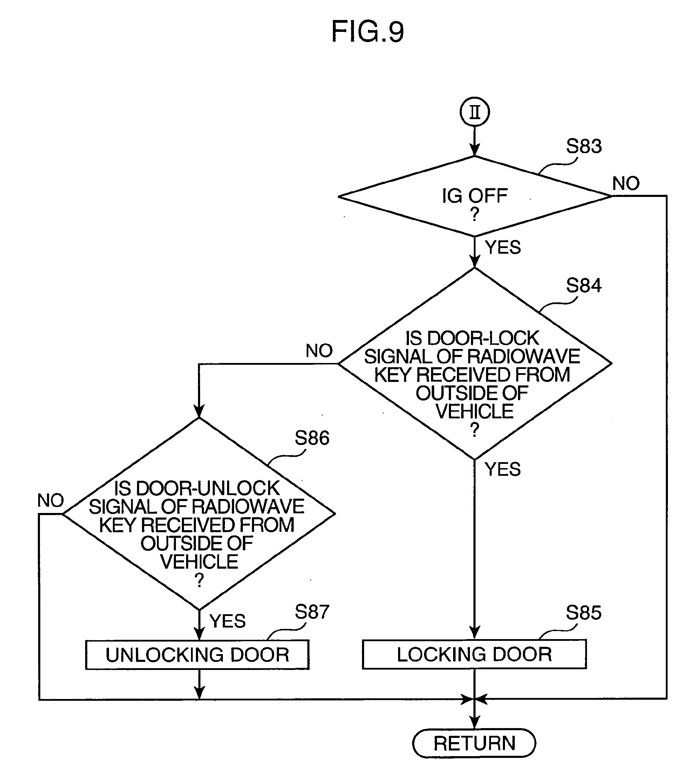

With reference to the flowcharts illustrated in FIGS. 8 and 9, a second idling stop control will be described below.

The control unit 100 first receives each detection value from the aforementioned sensors and switches, in Step S71, and then determines whether the engine is in the automatic engine stop state, in Step S72. When the determination in Step S72 is NO or it is determined that the engine is not in the automatic engine stop state, the process advances to Step S73 for determining whether headlights are in an ON state. When the determination in Step S73 is NO or it is determined that the headlights are not in the ON state, it is determined whether a remaining battery capacity (stored battery capacity) is equal to or less than a specified value, in Step S74. Then, when the determination in Step S74 is NO or it is determined that the remaining battery capacity is greater than the specified value, the process advances to Step S75 for determining whether the shift lever and the parking brake switch are, respectively, in the neutral position and in the ON state. When the determination in Step S75 is YES or it is determine that the shift lever and the parking brake switch are, respectively, in the neutral position and in the ON state, the process advances to Step S76. If the determination in Step S75 is NO or it is determine that these conditions are not satisfied, the process will return to Step S71. In Step S76, it is determined whether a given time has lapsed. When it is determined that the given time has lapsed, the process advances to Step S77 for executing the automatic engine stop process to automatically stop the engine. Then, in Step S78, it is determined whether the door-lock signal of the radiowave key is received from the outside of the vehicle. When the determination in Step S78 is YES or it is determined that the door-lock signal is received, the door and the power supply switch are, respectively, locked and turned off in Step S79, and then the process returns to the start. If the determination in Step S78 is NO or it is determined that the door-lock signal is not received, the process will returns directly to the start.

When the determination in Step S76 is NO or it is determined that the given time has not lapsed, the process advances to Step S80 for determining whether the door-lock signal of the radiowave key 40 is received from the outside of the vehicle. When the determination in Step S80 is YES or it is determined that the door-lock signal is received, the process advances to Step S81 for locking the door, turning off the power supply switch and automatically stopping the engine (automatic engine stop process), and then returns to the start. If the determination in Step S81 is NO or it is determined that the door-lock signal is not received, the process will return to Step S76.

When the determination in Step S73 is YES or it is determined that the headlights are in the ON state, or when the determination in Step S74 is YES or it is determined that the remaining battery capacity is equal to or less than the specified value, the process advances to Step S82 for informing the driver that the idling stop control is inexecutable, by turning on the alarm lamp 63 together with an audio or voice message. Then, in Step S83, it is determined whether the ignition key is in an OFF state. If the determination in Step S83 is NO or it is determined that the ignition key is in an ON state, the process will return directly to the start. When the determination in Step S83 is YES or it is determined that the ignition key is in the OFF state, the process advances to Step S84 for determining whether the door-lock signal of the radiowave key 40 is received from the outside of the vehicle. When the determination in Step S84 is YES or it is determined that the door-lock signal is received, the process advances to Step S85 for locking the door, and then returns to the start. When the determination in Step S85 is NO or it is determined that the door-lock signal is not received, the process advances to Step S86 for determining whether the door-unlock signal of the radiowave key is received from the outside of the vehicle. When the determination in Step S86 is YES or it is determined that the door-unlock signal is received, the process advances to Step 87 for unlocking the door, and then returns to the start. If the determination in Step S86 is NO or it is determined that the door-unlock signal is not received, the process will return directly to the start.

When the determination in Step S72 is YES or it is determined that the engine is in the automatic engine stop state, the process advances to Step S88 for determining whether the door-unlock signal of the radiowave key 40 is received from the outside of the vehicle. When the determination in Step S88 is YES or it is determined that the door-unlock signal is received, the door and the power supply switch 64 are, respectively, unlocked and turned on in Step S89. Then, in Step S90, it is determined whether the clutch pedal switch 51' is turned on. The turning-on of the clutch pedal switch 51' is considered as the driver's vehicle-start intent. When the determination in Step S90 is YES or it is determined that the clutch pedal switch 51' is turned on, the engine 10 is automatically started in Step S91. If the determination in Step S90 is NO or it is determined that the clutch pedal switch is not turned on, the process will returns directly to the start without automatically starting the engine 10. In addition, if the determination in Step S88 is NO or it is determined whether the door-unlock signal of the radiowave key 40 is not received from the outside of the vehicle, the process will advance to Step S78.

According to the above vehicle control systems, when the driver carries a pack to a customer, he/she can simply transmit the door-lock signal of the radiowave key 40 from the outside of the vehicle to lock the door and automatically stop the engine. This makes it possible to provide a higher level of convenience and achieve improved fuel economy, lowered emissions and reduced noise/vibration based on the idling stop control. Further, even if the driver tries to unlock the door in accordance with the door-unlock signal of the radiowave key 40 when he/she gets back to the vehicle after the delivery, the above vehicle control systems are designed such that the engine 10 cannot be automatically started only by the door-unlock signal of the radiowave key 40. The reason is that the driver can get back to the vehicle without intent to start the vehicle, for example, simply to pick up another pack. Thus, the above vehicle control systems are designed to continue the automatic engine stop state regardless of receiving the door-unlock signal from the radiowave key 40 so as to achieve improvement in fuel economy and other effects. In addition, the above vehicle control systems are designed to allow the engine 10 to be automatically started only after detection of the signal representing the driver's vehicle-start intent except for the door-unlock signal of the radiowave key 40, specifically the effective operation of the brake pedal switch 51 in the first embodiment or the turning-on of the clutch-pedal switch 51' in the second embodiment. This makes it possible to reliably synchronize the vehicle-start intent with the release of the automatic engine stop state.

Further, the above vehicle control systems are designed to turn off the power supply switch 64 for the accessory in response to the door-lock signal received from the radiowave key 40. This makes it possible to omit an additional operation for turning off the power supply 64 so as to provide a higher level of convenience, and prevent a useless power consumption due to neglect of turning off the power supply switch 64. The vehicle control systems are also designed to turn on the power supply switch 64 in response to the door-unlock signal. Thus, an operation for turning on the power supply switch 64 can be omitted to provide a higher level of convenience. Particularly, in a vehicle equipped with an automatic transmission designed such that a motor is driven to increase an oil pressure for actuating friction elements of a transmission mechanism, the oil pressure can be increased in response to the door-unlock signal from the radiowave key 40 in advance of the automatic start of the engine 10 to provide an enhanced engine start performance.

In the vehicle 1 equipped with the automatic transmission 20 as in the first embodiment, the vehicle control system is designed to automatically start the engine 10 upon satisfaction of the conditions that the brake pedal is operated during stop of the engine 10, and the shift lever is released from the prohibition of shifting based on the shift lock mechanism 70. Thus, the driver's vehicle-start intent can be adequately figured out to automatically start the engine 10 in early stage and smoothly start the vehicle. This can eliminate the risk that the driver feels a response delay during start of the vehicle 1.

More specifically, when the brake pedal is depressed in a specified value or more, the shift lock mechanism 70 releases the prohibition of shifting from the parking range to one of the remaining ranges (e.g. a running range, such as D range) to allow the shift lever to be shifted from the parking range to one of the remaining ranges. The driver's vehicle-start intent can be clearly recognized based on the specified value or more of depression of the brake pedal. Thus, when the driver depresses the brake pedal in a specified value or more (i.e. depresses the brake pedal to the extent capable of releasing the action of the shift lock mechanism 70), the engine 10 is automatically started. That is, the driver's actions of depressing the brake pedal in a specified value or more, shifting the shift lever to the running range, and depressing an accelerator pedal instead of the brake pedal, provides an enough time for allowing the oil pimp 30 to be fully driven so as to sufficiently increase the hydraulic oil pressure. This makes it possible to adequately actuate the hydraulically-actuated friction elements 21 so as to reliably obtain a desired connection between power transmission lines and a desired transmission gear ratio to achieve a smooth vehicle start.

The second idling stop control is configured to avoid executing the automatic engine stop process during the ON state of the headlights, because, if the idling stop control (automatic engine stop process) is executed in the ON state of the headlights, the battery is likely to be excessively consumed due to relatively large power consumption of the headlights. Thus, during the ON state of the headlights, an alternator is preferentially driven by the engine without executing the idling stop control (automatic engine stop process) to generate electric power so as to ensure an adequate stored battery power. On the other hand, during the ON state of a small light, such as a hazard flasher, having relatively low power consumption or less adverse affect on drain of the battery, the idling stop control (automatic engine stop process) may be executed to achieve improved fuel economy, lowered emissions and reduced noise/vibration.

Further, in the above vehicle control systems, when the stored battery power is equal to or less than a specified value, an alternator can be preferentially driven by the engine without executing the idling stop control (automatic engine stop process) to generate electric power so as to ensure an adequate stored battery power. On the other hand, when the stored battery power is greater than the specified value, the engine 10 may be automatically stopped to achieve improved fuel economy, lowered emissions and reduced noise/vibration.

Furthermore, the above vehicle control systems are designed to inform the driver of the fact that the engine 10 cannot be automatically stopped. This makes it possible to give information about inexecutability of the automatic engine stop process to the driver, and prompt the driver to stop the engine 10, where needed, through the operation of the ignition key, or the push-"off" operation for manually stopping the engine in the engine start/stop button.

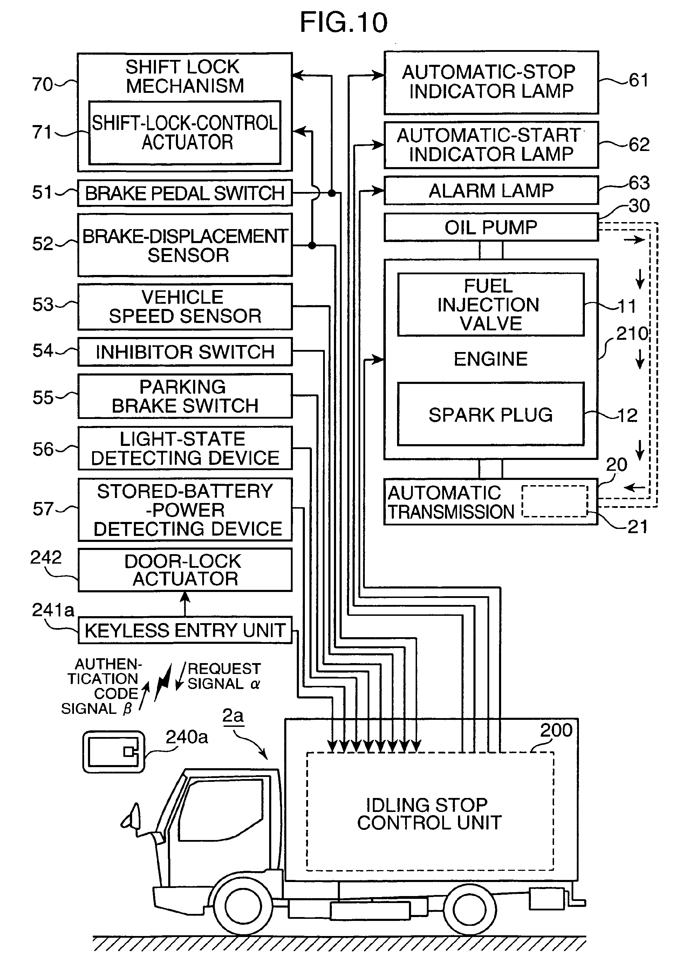

A third embodiment of the present invention will be described below. As shown in FIG. 10, differently from the first and second embodiments in FIGS. 1 and 6, a vehicle 2a includes a keyless entry unit 241a serving as a transceiver device ("transmitting means" and "receiving means" set forth in the appended claim 10) in place of the radiowave-key-signal receiving device 41. This keyless entry unit 241a is adapted to communicate with the so-called smart card 240a serving as a radiowave key (automatic transmitting-type radiowave key: similar to the smart key as mentioned in the first and second embodiments). The keyless entry unit 241a is designed to automatically transmit a request signal a to the smart card at constant time-intervals. Correspondingly, the smart card 240a is designed to automatically transmit a signal (reply signal) containing its own authentication code, in response to the request signal a. Note that in this third embodiment, the control unit 200 is similar to the control unit 100 for the first and the second embodiments which includes detection means for detecting each of the signals generated by all those elements 70, 71, 51, 52, 53, 54, 55, 56, 57, 242, shown in Fig 10, with arrows going into the control unit 100.

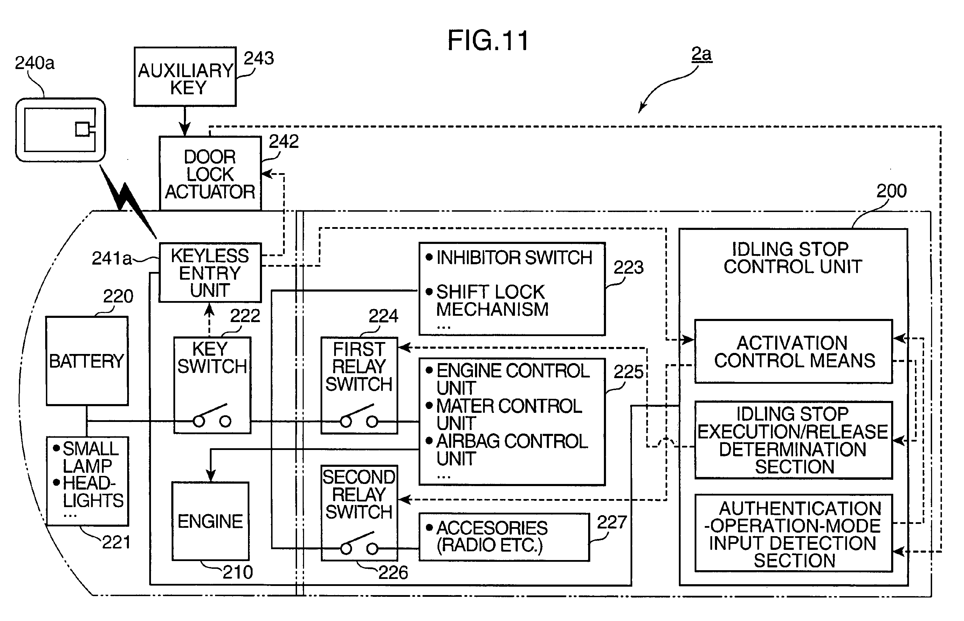

As shown in FIG. 11, in the vehicle 2a, a battery 220 is connected directly with a group of lights 221, such as a small light and a headlight, the keyless entry unit 241a, and an idling stop control unit 200. The battery 220 is also connected with a group of shift lock mechanism elements 223, such as an inhibitor switch 54 and a shift lock mechanism 70, through a key switch 222. Further, the battery 220 is connected with a group of control units 225, such as an engine control unit, a meter control unit and an airbag control unit, through the key switch 222 and a first relay switch 224. Furthermore, the battery 220 is connected with a group of accessories 227, such as a radio, through the key switch 222 and a second relay switch 226.

Among them, the engine control unit in the control unit group 225 is operable to send a control signal to an engine 210 of the vehicle 2a. The key switch 222 is designed to be turned on when an additional hard key (engine start key equivalent to the ignition key in the first and second embodiments) other than the smart card 240a is inserted into a key cylinder (not shown) adjacent to a driver's seat of the vehicle 2a, and be turned off when the additional hard key is pulled out of the key cylinder. Thus, the key switch 222 is operable, when the additional hard key is inserted into the key cylinder, to send a key insertion signal to the keyless entry unit 241a ("hard-key-insertion detecting means" set forth in the appended claim 9)

Alternatively, the key switch 222 may be an engine start/stop button capable of manually operating the start/stop of the engine 210 or a device associated with the engine start/stop button ("manual engine-start/stop operation means" set forth in the appended claim 9). Specifically, the engine start/stop button is designed to manually start the engine 210 when being turned "on" in response to a pushing operation, and to manually stop the engine when being turned "off" in response to a subsequent re-pushing operation.

The vehicle 2a also has an auxiliary key 243 for use in emergency, such as loss of the smart card 240a. When this auxiliary key 243 is inserted into a keyhole of a vehicle door and then operated, a door-lock actuator 242 sends a signal to an authentication-operation mode input detecting section of the idling stop control unit 200, and then the authentication-operation mode input detecting section sends a corresponding signal to an activation control section of the idling stop control unit 200. On the other hand, in a normal case where a driver or another occupant takes along the smart card 240a, the keyless entry unit 241a sends a signal directly to the activation control section of the idling stop control unit 200. Then, in either case, the activation control section sends a signal to an idling stop execution/release determination section of the idling stop control unit 200, and the determination section sends an ON or OFF signal to the first relay switch 224 ("power-supply control means for turning off and on an engine power supply" set forth in the appended claim 2). Thus, when the OFF signal is sent from the idling stop execution/release determination section to the first relay switch 224, the engine 210 is automatically stopped or the automatic engine stop process is executed. When the ON signal is sent from the determination section to the first relay switch 224, the automatic engine start process becomes ready.

The activation control section of the idling stop control unit 200 also sends an ON or OFF signal to the second relay switch 226 ("power-supply control means for turning off and on an accessory power supply" set forth in the appended claim 2). Thus, when the OFF signal is sent from the activation control section to the second relay switch 226, the accessory group 227 is automatically turned off. When the ON signal is sent from the activation control section to the second relay switch 226, the accessory group 227 is automatically turned on. These provide a higher level of convenience.

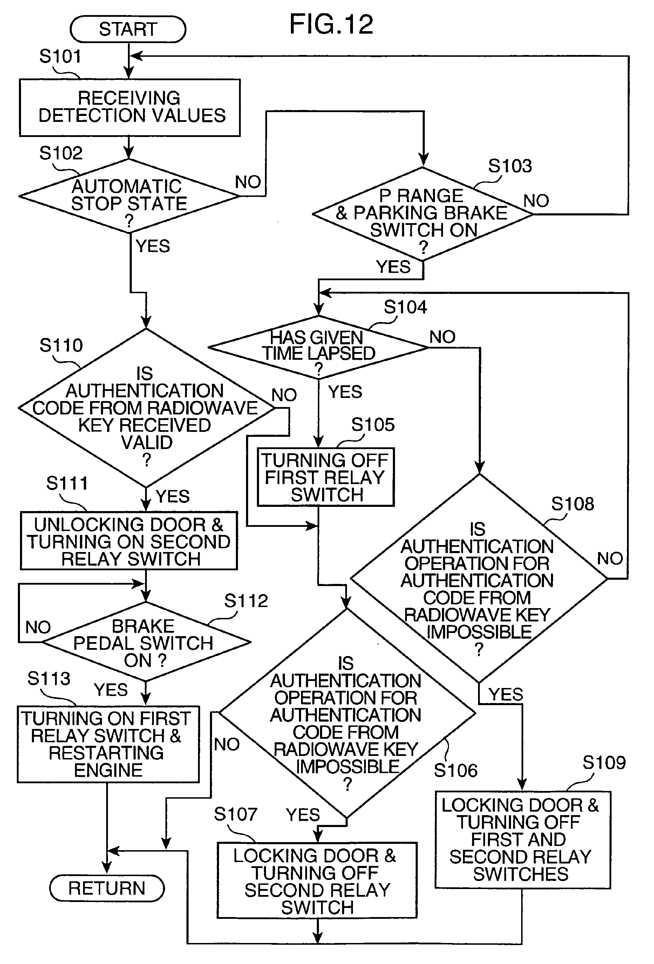

With reference to the flowchart illustrated in FIG. 12, a first idling stop control for the vehicle 2a in the third embodiment will be described below. This first idling stop control corresponds to the appended claims 1 to 3.

The control unit 200 first receives each detection value from the aforementioned sensors and switches, in Step S101, and then determines whether the engine is in the automatic engine stop state, in Step S102. When the determination in Step S102 is NO or it is determined that the engine is not in the automatic engine stop state, the process advances to Step S103 for determining whether the shift lever and the parking brake switch are, respectively, in the P range and in the ON state. When the determination in Step S103 is YES or it is determined that the shift lever is in the P range and the parking brake switch is in the ON state, the process advances to Step S104. If these conditions are not satisfied in Step S103, the process will returns to Step S101.

In Step S104, it is determined whether a given time has lapsed. When it is determined that the given time has lapsed, the process advances to Step S105 for turning off the first relay switch 224. That is, the automatic engine stop process is executed to automatically stop the engine 210. In this state, the additional hard key is inserted into the key cylinder adjacent to the driver's seat, and thereby the key switch 222 is kept in an ON state. Then, in Step S106, it is determined whether an authentication operation for the authentication code from the radiowave key or smart card 240a is incapable or impossible (the authentication operation is performed by the keyless entry unit 241a). Specifically, it is determined whether an intensity of an authentication code signal β from the smart card 240a is educed to a specified value or less, as the result of the fact that the driver or another occupant taking along the smart card 240a gets away from the vehicle 2a by a given distance. When the determination in Step S106 is YES, the process advances to Step S 107 for locking the door, and turning off the second relay switch 226 to cut the power supply to the accessory group 227, and then returns to a start of the process. If the determination in Step S106 is NO, the process will return directly to the start, because the driver or another occupant taking along the smart card 240a can stay within a given distance from the vehicle 2a.

When the determination in Step S104 is NO or it is determined that the given time has not lapsed, the process advances to Step S108 for determine whether the authentication operation for the authentication code from the smart card 240a is impossible or incapable, in the same manner as that in Step S 106. When the determination in Step S108 is YES, the process advances to Step S 109 for locking the door, turning off the first relay switch 224 to executes the automatic engine stop process, and turning off the second relay switch 226 to cut the power supply to the accessory group 227, and then returns to the start. If the determination in Step S108 is NO, the process will return to Step S104.

When the determination in Step S102 is YES or it is determined that the engine is in the automatic engine stop state, the process advances to Step S110 for determining whether the authentication code from the radiowave key or smart card 240a is valid. Specifically, the driver or another occupant taking along the smart card 240a gets back within a given distance from the vehicle 2a, and thereby an intensity of the authentication code signal β from the smart card 240a is increased up to a specified value or more allowing for the authentication operation. Then, it is determined whether the authentication code signal β is valid as the result of the authentication operation. When the determination in Step S110 is YES, the process advances to Step S 111 for unlocking the door, and turning on the second relay switch 226 to connect the power supply to the accessory group 227. If the determination in Step S111 is NO, the process will return to Step S106, because the driver or another occupant taking along the smart card 240a can stay within the given distance from the vehicle 2a.

Then, in Step S112, it is determined whether the brake pedal is effectively operated (depressed). The effective operation of the brake pedal is considered as the driver's intent to release the shift lock state so as to start the vehicle. When the determination in Step S112 is YES or it is determined that the brake pedal is effectively operated, the process advances to Step S113 for turning on the first relay switch 224 to supply a power to the engine control unit in the control unit group 225 so as to automatically start the engine 210. During the determination of NO in Step S112, the process will be kept in a standby state until the brake pedal is effectively operated.

While the driver's vehicle-start intent in Step S112 is detected based on the effective operation of the brake pedal, the detection of the driver's vehicle-start intent is not limited to such a manner. For example, the driver's vehicle-start intent may be detected based on a driver's action of wearing or attaching a seatbelt, or may be detected based a parking-brake release signal.

As above, this idling stop system can achieve the same effects in the first embodiment illustrated in FIG 3. In addition, the idling stop system is designed to turn on/off the power supply for the engine 210 through the first relay switch 224. This makes it possible to automatically stop the engine 210 at an adequate timing by turning off the power supply for the engine 210 (Step S105), and automatically start the engine 210 at an adequate timing by turning on the power supply for the engine 210 (Step S113).

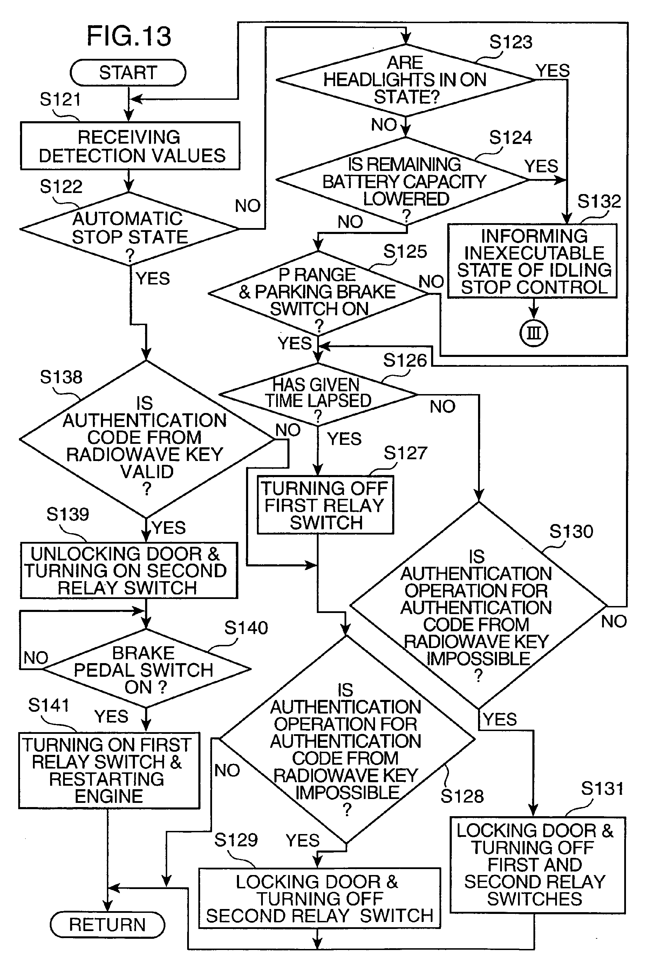

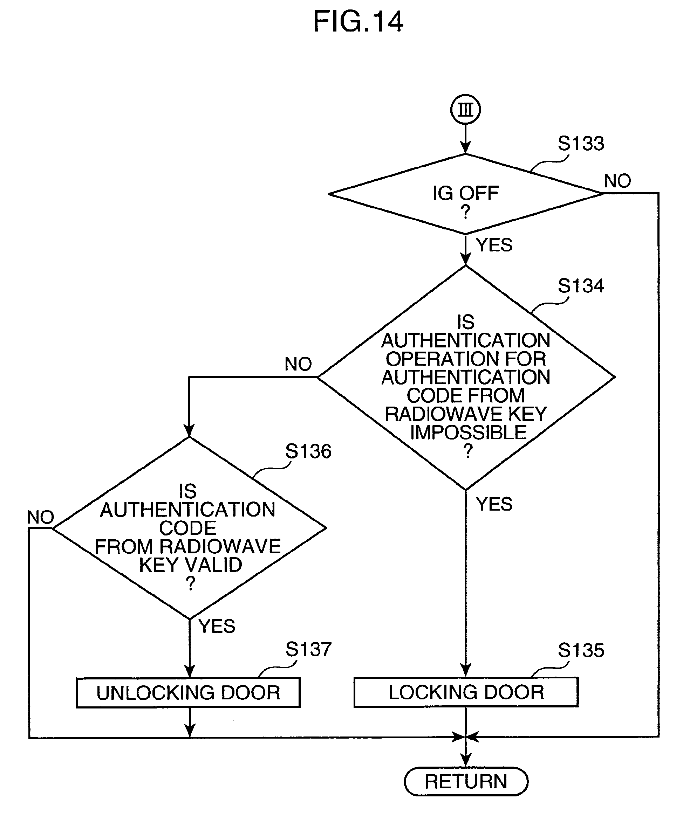

With reference to the flowcharts illustrated in FIGS. 13 and 14, a second idling stop control for the vehicle 2a in the third embodiment will be described below. This second idling stop control corresponds to the appended claims 4, 7 and 8. In this second idling stop control, Steps S121, S122, S125 to S131, and S138 to S141 are equivalent to Steps S101 to S113 in FIG. 12. Thus, the description about these Steps will be omitted, and only Steps S123, S124, and S132 to S137 as a feature of this control will be described below.

When the determination in Step S122 is NO or it is determined that the engine is not in the automatic engine stop state, the process advances to Step S123 for determine whether headlights are in an ON state. When the determination in Step S123 is NO or it is determined that the headlights are not in the ON state, it is determined whether a remaining battery capacity (stored battery capacity) is equal to or less than a specified value, in Step S124. Then, when the determination in Step S124 is NO or it is determined that the remaining battery capacity is greater than the specified value, the process advances to Step S125.

When the determination in Step S123 is YES or it is determined that the headlights are in the ON state, or when the determination in Step S124 is YES or it is determined that the remaining battery capacity is equal to or less than the specified value, the process advances to Step S132 for informing the driver that the idling stop control is inexecutable, by turning on the alarm lamp 63 together with an audio or voice message. Then, in Step S133, it is determined whether the ignition key (hard key) is in an OFF state. Specifically, it is determined whether the hard key inserted into the key cylinder adjacent to the driver's seat is not located at an IG (ignition)-ON position. If the determination in Step S133 is NO or it is determined that the hard key is in the IG-ON position, the process will return directly to the start. When the determination in Step S133 is YES or it is determined that the ignition key is not in the IG-ON position, the process advances to Step S134 for determine whether the authentication operation for the authentication code from the smart card 240a is incapable or impossible, in the same manner as that in Step S108. When the determination in Step S134 is YES, the process advances to Step S135 for locking the door. When the determination in Step S135 is NO, the process advances to Step S136 for determining whether the authentication code signal from the smart card 240a is valid as the result of the authentication operation, in the same manner as that in Step S110. When the determination in Step S136 is YES, the process advances to Step S 137 for unlocking the door. If the determination in Step S137 is NO, the process will return directly to the start.

In this way, the same effects as those in the first embodiment illustrated in FIGS. 4 and 5 can be obtained.

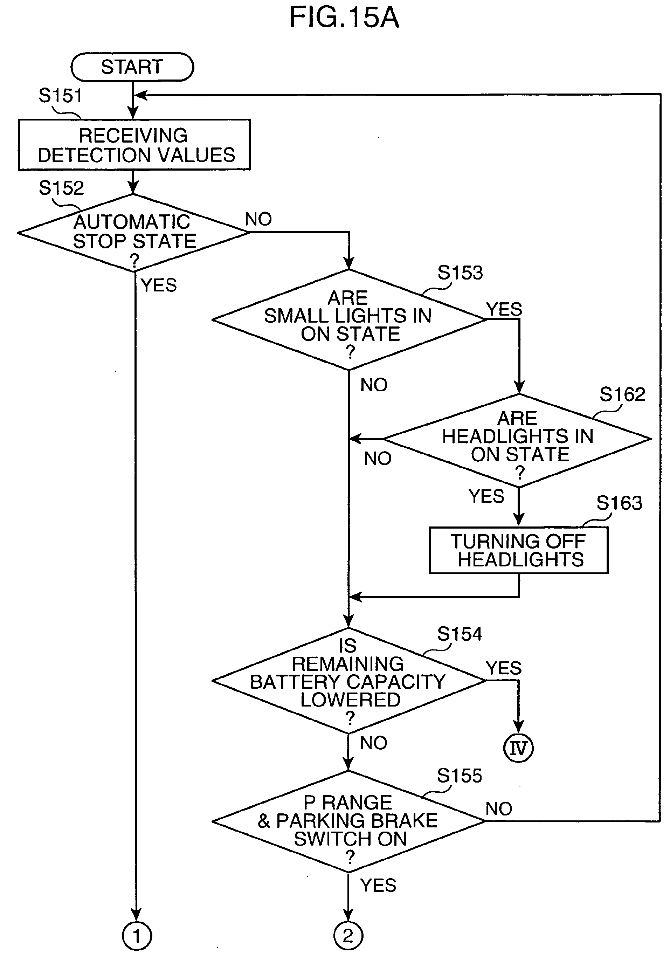

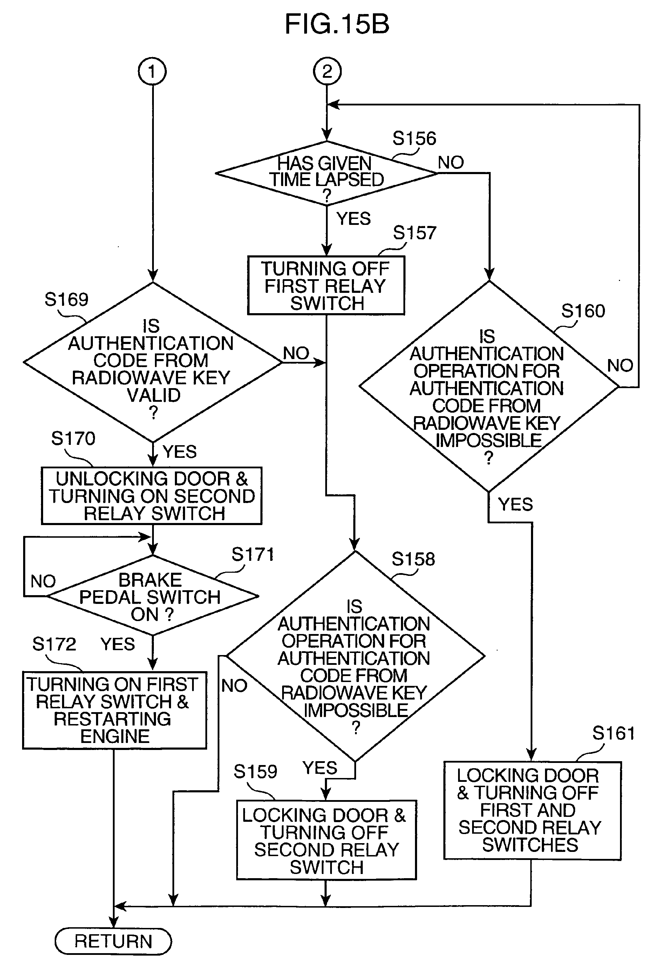

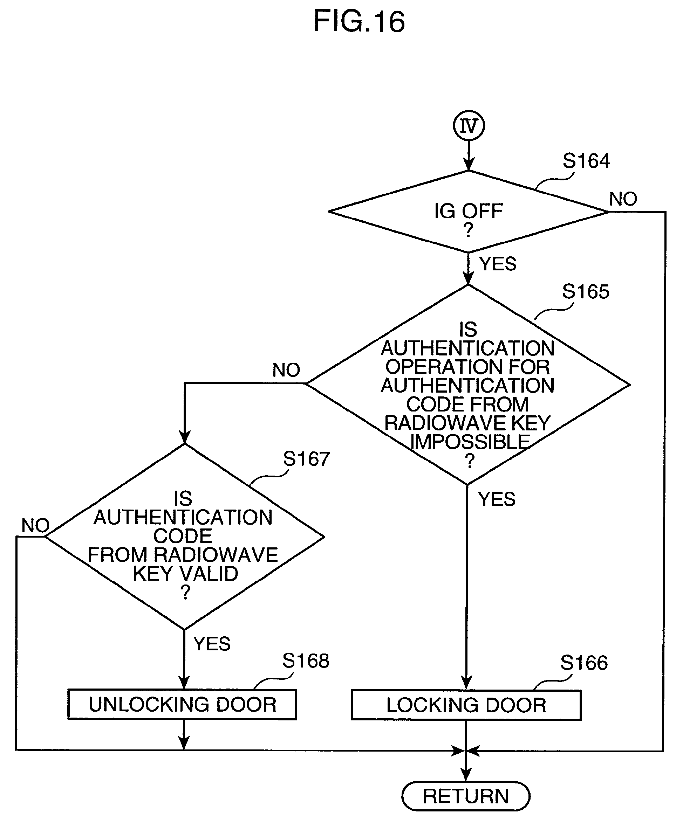

With reference to the flowcharts illustrated in FIGS. 15 and 16, a third idling stop control for the vehicle 2a in the third embodiment will be described below. This third idling stop control corresponds to the appended claims 5 and 6. In this third idling stop control, Steps S151, S152, S154 to S161, S164 to S168, and S169 to S172 are equivalent to Steps S121, S122, S124 to S131, S133 to S137, and S138 to 141 in FIGS. 13 and 14. Thus, the description about these Steps will be omitted, and only Steps S153, S162 and S163 as a feature of this control will be described below.

When the determination in Step S152 is NO or it is determined that the engine is not in the automatic engine stop state, the process advances to Step S153 before Step S154. In Step S153, it is determined whether small lights are in an ON state. If the determination in Step S153 is NO or it is determined that the small lights are not in the ON state (thus, headlights are not in an ON state), the process will advance directly to Step S154. When the determination in Step S153 is YES or it is determined that the small lights are in the ON state, the process advances directly to Step S162 to determine whether the headlights are in an ON state. If the determination in Step S162 is NO or it is determined that the headlights are not in the ON state (thus, only the small lights are in an ON state), the process will advance directly to Step S154. When the determination in Step S162 is YES or it is determined that the headlights are in the ON state (thus, both the small lights and headlights are in an ON state), the process advances directly to Step S163 to turn off only the headlights, and then advances to Step S154.

As above, in the third idling stop control, if a light (small lights and/or headlights) of the vehicle 2a is in an ON state, the light is turned off (Step S163), and then the automatic engine stop process is executed (Step S157). This makes it possible to execute the automatic engine stop process without runout of the battery 220. While the automatic engine stop process in the above control is executed after turning off the light, this order does not make any difference. For example, the light may be turned off after automatically stopping the engine 210, or may be turned off in conjunction with the automatic engine stop process.

In addition, if both the headlights having relatively large power consumption and the small lights relatively low power consumption are in the ON state (YES in Step S162), only the headlights having relatively large power consumption can be turned off (Step S163). Further, if only the small lights relatively low power consumption are in the ON state (NO in Step S162), the small lights can be kept in the ON state. This makes it possible to execute the automatic engine stop process while minimizing runout of the battery, and avoid the occurrence of uncomfortable feel and/or inconvenience (particularly, in dark surroundings) due to the turning-off of all lights of the vehicle enforcedly executed independently of driver's intent.

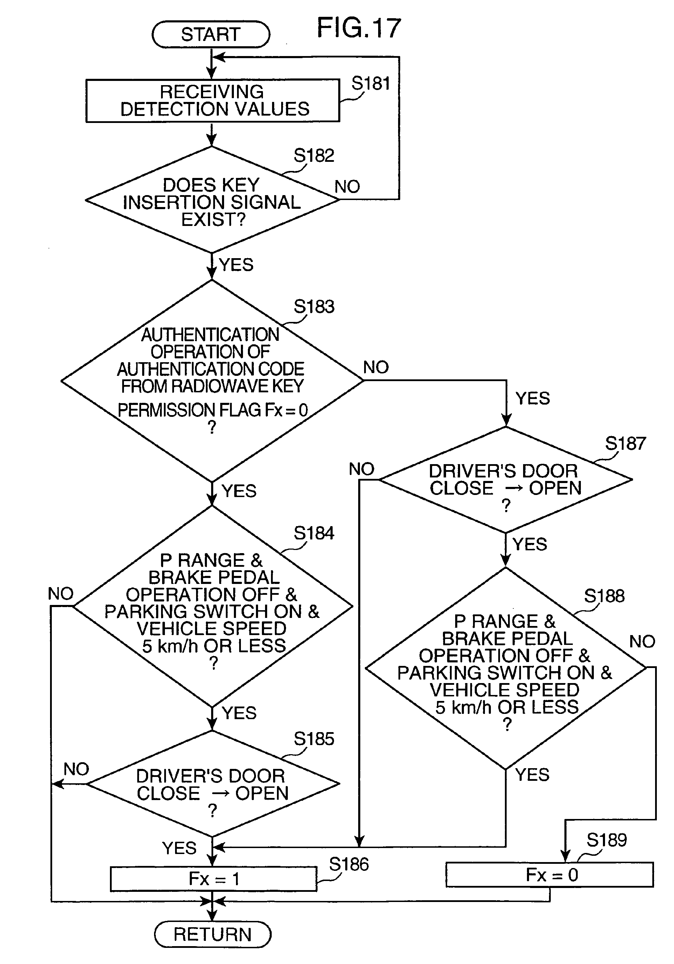

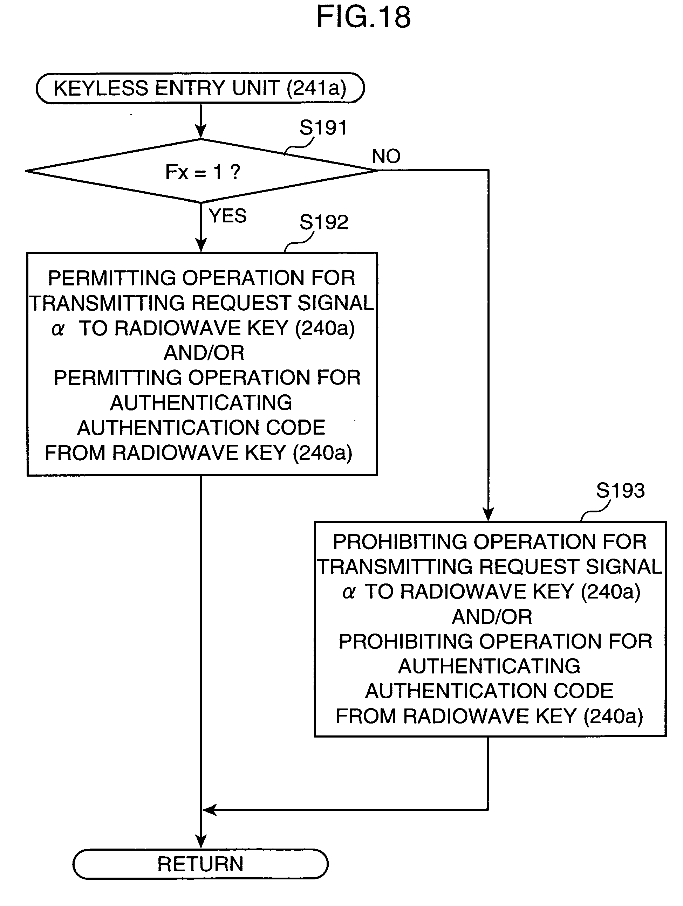

With reference to the flowcharts illustrated in FIGS. 17 and 18, a fourth idling stop control for the vehicle 2a in the third embodiment will be described below. Specifically, FIG 17 shows a process for setting a permission flag Fx in the vehicle 2a, which mainly corresponds to the appended claims 12 and 13. FIG 18 shows a process for a permission/prohibition control to be performed by a keyless entry unit based on the permission flag Fx, which mainly corresponds to the appended claims 9 and 10.

In Step S 181, the control unit first receives each detection value. Then, in Step S 182, it is determined whether a key insertion signal (a signal sent from the key switch 222 to the keyless entry unit 241a when the hard key is being inserted into the key cylinder, as described in connection with FIG. 11) exists. When the determination in Step S182 is YES or it is determined that the key insertion signal exists (or the hard key is inserted into the key cylinder, the process advances to Step S183. If the determination in Step S182 is NO or it is determined that no key insertion signal exists, the process will return to Step S181.

Then, in Step S183, it is determined whether a flag Fx representing either one of permission and prohibition of the authentication operation for the authentication code to be transmitted from the radiowave key or smart card 240a (the authentication operation is performed by the keyless entry unit 241a, as mentioned above) is reset to zero. In this control, the flag Fx is set to zero when the hard key is inserted into the key cylinder, and the driver sits on the driver seat. Thus, given that the hard key is inserted into the key cylinder, and the driver sits on the driver seat, the flag Fx is set to zero. Therefore, the determination in Step S183 is made as YES, and the process advances to Step S184.

In Step S 184, it is determined whether the following conditions are satisfied: (i) the shift lever (selector lever) is in the P range; (ii) the brake pedal is not effectively operated; (iii) the parking brake switch is the ON state; and (iv) the vehicle speed is equal to or less than a specified value (5 km/h in the illustrated control). When the determination in Step S184 is YES, the process advances to Step S185 for determining whether a driver's door is changed from a closed state to an open state. When the determination in Step S185 is YES, the flag Fx will be set to 1 (one). That is, when the driver's door is opened/closed, it is determined that the driver gets out of the vehicle 2a (the driver does not sit on the driver's seat).

If the determination in Step S184 is NO or it is determined that at least one of the four conditions is not satisfied, the process will return to a start to a process without changing the flag Fx of zero, because of the possibility that the driver is still in the vehicle. Further, as long as it is determined that the driver's door is not open/closed in Step S 185, even if the determination in Step S184 is NO or it is determined that all of the four conditions are satisfied, the process will also return to the start without changing the flag Fx of zero, because of the possibility that the driver is still in the vehicle.

When the determination in Step S183 is NO (flag Fx is set to 1), i.e. the hard key is left in the key cylinder and the driver gets out of the vehicle 2a or does not sit on the driver's seat, the process advances to Step S187 for determining whether the driver's door is changed from the closed state to the open state. When the determination in Step S187 is YES, the process advances to Step S187 for determining whether the following conditions are satisfied: (i) the shift lever (selector lever) is in the P range; (ii) the brake pedal is not effectively operated; (iii) the parking brake switch is the ON state; and (iv) the vehicle speed is equal to or less than a specified value (5 km/h in the illustrated control), as in Step S184. If the determination in Step S188 is NO, the process advances to Step S189 for resetting the flag Fx to zero. That is, if at least one of the four conditions in Step S188 is not satisfied, after the driver's door is open/closed, it can be considered that the driver has gotten on the vehicle 2a (sits on the driver's seat).

If the determination in Step S187 is No, the process will return to the start without changing the flag Fx of 1, on the basis that the driver has not yet gotten out of the vehicle, as long as the driver's door is not opened/closed. Further, when the determination in Step S188 is YES, the process also returns to the start without changing the flag Fx of 1, on the basis that the driver has not yet sat on the driver's seat, as long as all of the four conditions in Step S188 are satisfied.

Referring to FIG. 18, in Step S191 the keyless entry unit 241a then checks the value of the flag Fx. If the flag Fx has a value of 1, or when the hard key is left in the key cylinder and the driver gets out of the vehicle 2a or does not sit on the driver's seat, Step S192 will be executed. If the flag Fx has a value of zero, or when the hard key is left in the key cylinder and the driver gets on the vehicle 2a or sits on the driver's seat, Step S193 will be executed.

In Step S192, the operation for transmitting the request signal a (see FIG 10) to the smart card 240a (this operation is performed by the keyless entry unit 241a itself, as mentioned above), and/or the authentication operation for the authentication code in the authentication code signal β transmitted from the smart card 240a (this operation is also performed by the keyless entry unit 241a itself, as mentioned above), are permitted. Thus, it is permitted to execute the door lock/unlock control and the automatic engine stop process in response to the authentication code β from the smart card 240a.

In Step S193, the operation for transmitting the request signal a (see FIG. 10) to the smart card 240a (this operation is performed by the keyless entry unit 241a itself, as mentioned above), and/or the authentication operation for the authentication code in the authentication code signal β transmitted from the smart card 240a (this operation is also performed by the keyless entry unit 241a itself, as mentioned above), are prohibited. Thus, it is prohibited to execute the door lock/unlock control and the automatic engine stop process in response to the authentication code signal β from the smart card 240a.

For example, the control illustrated in FIG. 12 is configured such that the door is locked, and the first relay switch 224 is turned off to automatically stop the engine 210, in Step S109. During this process, in Step S108 just before Step S109, it is determined whether the authentication operation for the authentication code from the smart card 240a is impossible or incapable. When the determination in Step S108 is YES or it is determined that the authentication operation is incapable, i.e. the intensity of the authentication code signal β from the smart card 240a is reduced to a specified value or less, the process advances to Step S109. In other words, the determination in Step S108 is made on the premise that the communication about the signals a and β is performed between the keyless entry unit 241a and the smart card 240a. Further, this communication starts with transmitting of the request signal a from the keyless entry unit 241a to the smart card 240a. Thus, only if the transmitting operation of the request signal a is permitted, the determination in Step S108 can be validly made to allow the door lock/unlock control and the automatic engine stop process in Step S109 to be executed effectively and advantageously. Conversely, when the transmitting operation of the request signal a from the keyless entry unit 241a to the smart card 240a is prohibited, the determination in Step S108 cannot be validly made (the determination itself cannot be made) so that the door lock/unlock control and the automatic engine stop process in Step S109 are prohibited (become inexecutable).

As another example, the control illustrated in FIG 12 is configured such that the door is unlocked in Step S111 and then the first relay switch 224 is turned on to automatically start the engine 210, in step S210. During this process, in Step S110 just before Step S111, it is determined whether the authentication code from the smart card 240a is valid as the result of the authentication operation. If the determination in Step S110 is YES or it is determined that the authentication code is valid, the process can advance to Step S111 and S113. In other words, the determination in Step S110 is made on the premise that the communication about the signals a and β is performed between the keyless entry unit 241a and the smart card 240a, and the keyless entry unit 241a validates the authentication code through the authentication operation. Thus, only if the authentication operation for the authentication code is permitted, the determination in Step S110 can be validly made to allow the door unlock control in Step S111 and the automatic engine start process in Step S113 to be executed effectively and advantageously. Conversely, when the authentication operation for the authentication code from the smart card 240a is prohibited, the determination in Step S110 cannot be validly made (the determination itself cannot be made) so that the door unlock control in Step S111 and the automatic engine start process in Step S113 are prohibited (become inexecutable).

As above, the door lock/unlock control and the automatic engine stop process in response to the signal β are prohibited (Fx = 0: Step S193) when the hard key (engine start key) other than the smart card 240a is inserted into the key cylinder (YES in Step S182) and the driver sits on the driver's seat or is in the vehicle (in the period from the determination of NO in Step S188 until the determination of YES in Step S185). Thus, the problem in the conventional control designed to execute the automatic engine stop/start processes in conjunction with the signal β of the smart card 240a, or the problem about improper execution of the door lock/unlock control and/or the automatic engine stop/start processes can be reliably avoided.

Particularly, in the above keyless entry system using the automatic transmitting-type smart card 240a as in the third embodiment, the keyless entry unit 241a is likely to cause an authentication error of the authentication code signal β. However, the above control can reliably prevent the improper execution of the door lock/unlock control and/or the automatic engine stop/start processes which would otherwise occur in the conventional keyless entry system. In addition, this control can reduce unnecessary drain in a battery of the smart card 240a.

Further, the determination of whether the driver sits on the driver's seat (see Step S184 and S188) can be made using existing commonly-used in-vehicle sensors (the inhibitor switch 54, the brake pedal switch 51, the parking brake switch 55, the vehicle speed sensor 53, etc.) without additional new sensors, or increase in cost, so as to determine whether the driver is in the vehicle, adequately, accurately and reasonably at low cost.

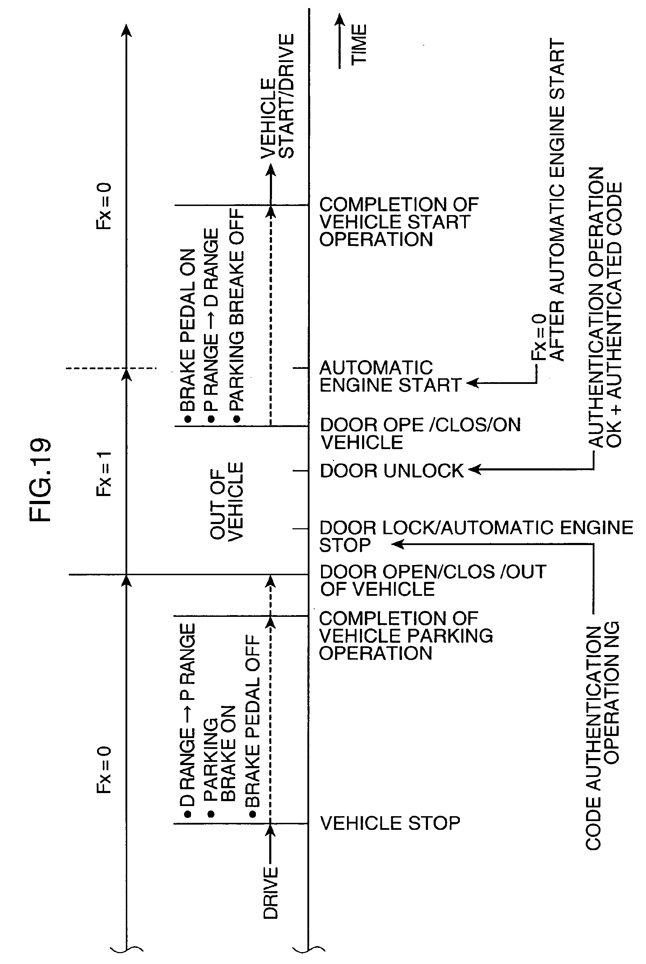

FIG. 19 is a time chart showing changes in the flag Fx in the fourth idle stop control in the third embodiment. When the driver opens/closes the door to get out of the vehicle after stopping the vehicle 2a and complete required procedure for parking, the flag Fx is shifted to 1. Thus, when the authentication operation for the authentication code becomes impossible (Step S108), the door lock control and the automatic engine stop process are executed (Step S109). Subsequently, when the driver gets back to the vicinity of the vehicle 2a, the door unlock control is executed (Step S111) if the authentication code (Step S110) is authenticated. When the driver performs some operation to satisfy any one of the conditions in Step S188 after opening/closing the door to get on the vehicle, the flag Fx is changed from 1 to zero. Each of the above conditions corresponds to the driver's vehicle-start intent. Thus, the automatic engine start process is executed (Step S113). That is, the change of the flag Fx from 1 to zero occurs after the automatic engine start process is fully completed. Then, the driver completes required procedure for vehicle start, and then starts/drives the vehicle 2a.

In FIG. 19, the automatic engine stop condition may be only a combination of the shifting from the D range to the P range and the turning-on of the parking brake switch. The automatic engine start condition may be only the turning-on of the parking brake switch when the shift lever is in the P range. In FIG 19, the engine power supply is turned off in conjunction with lock of the door, and the engine power supply is turned on in conjunction with unlock of the door.

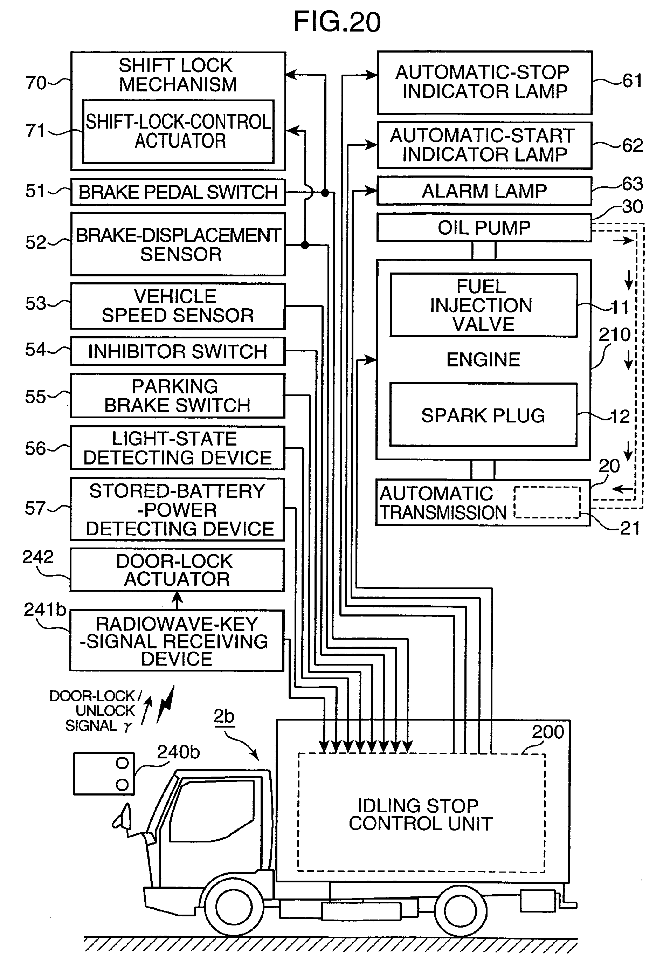

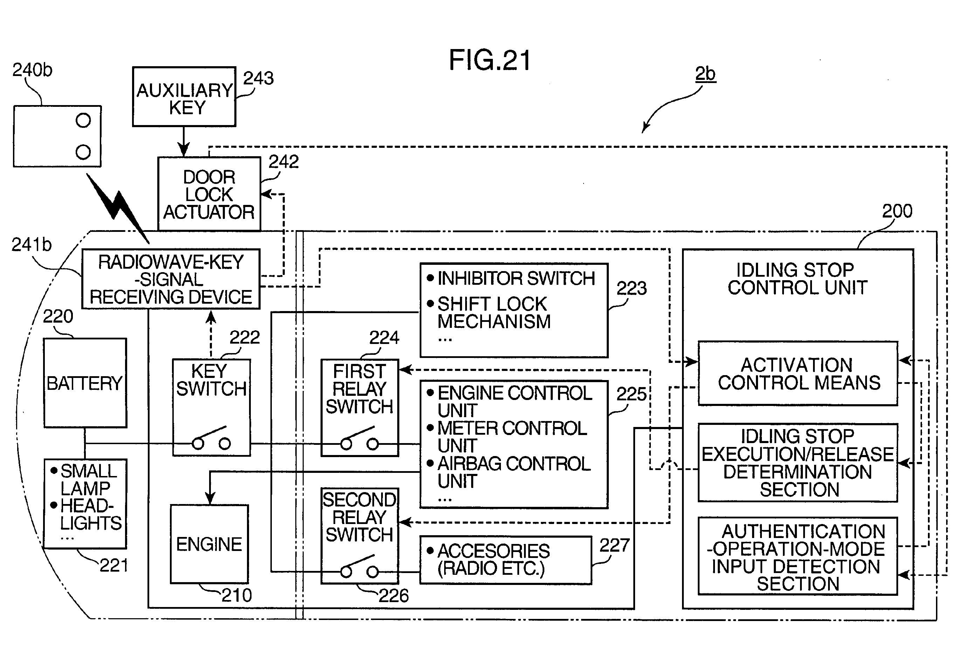

A fourth embodiment of the present invention will be described below. As shown in FIGS. 20 and 21, differently from the third embodiment in FIGS. 10 and 11, a vehicle 2b in this embodiment includes a radiowave-key-signal receiving device 241b serving as a receiving device ("receiving means" set forth in the appended claim 11) in place of the keyless entry unit 241a. This radiowave-key-signal receiving device 241b is adapted to receive door-lock and door-unlock signals to be transmitted from the so-called manual transmitting-type radiowave key (equivalent to the switch operation-based radiowave key 40 as described in the first and second embodiments). Note that in this fourth embodiment, the control unit 200 is similar to the control unit 200 for the third embodiment which includes detection means for detecting each of the signals generated by all those elements 70, 71, 51, 52, 53, 54, 55, 56, 57, 242, shown in Fig 20, with arrows going into the control unit 200.

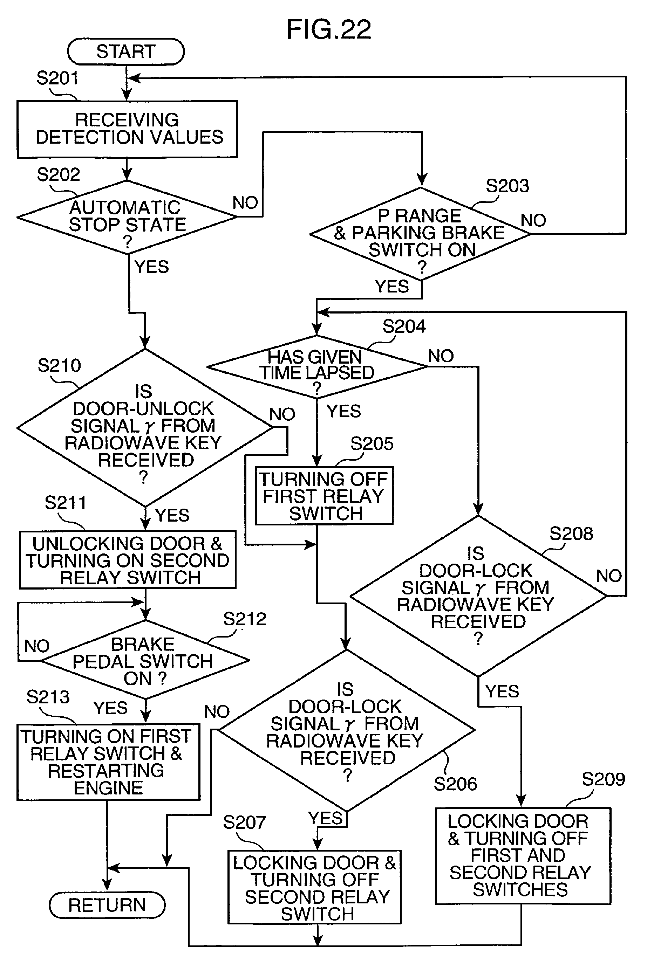

With reference to the flowchart illustrated in FIG 22, a first idling stop control for the vehicle 2b in the fourth embodiment will be described below. This first idling stop control corresponds to the appended claims 1 to 3. In this first idling stop control, Steps S201 to S205, S207, S209, and S211 to S213 are equivalent to Steps S101 to S105, S107, S109, S111 to S113 in FIG 12. Thus, the description about these Steps will be omitted, and only Steps S203, S208 and S210 as a feature of this control will be described below.

In Step S205, the first relay switch 224 is turned off to automatically stop the engine 210. Then, in Step S206, it is determined whether a door-lock signal γ from the radiowave key or manual transmitting-type switch operation-based radiowave key 240b is received. When the determination in Step S 206 is YES, the process advances to Step S207 for locking the door, and turning off the second relay switch 226 to cut power supply to the accessory group 227, and then returns to a start of the process. If the determination in Step S 206 is NO, the process returns directly to the start.

When the determination in Step S204 is NO or it is determined that the given time has not lapsed, the process advances to Step S208 for determining whether the door-lock signal γ from the manual transmitting-type radiowave key 240b is received, as in Step S206. When the determination in Step S208 is YES, the process advances to Step S209 for locking the door, turning off the first relay switch 224 to execute the automatic engine stop process, and turning off the second relay switch 226 to cut power supply to the accessory group 227, and then returns to the start. If the determination in Step S208 is NO, the process returns to Step S204.

When the determination in Step S202 is YES or it is determined that the engine is in the automatic engine stop state, the process advances to Step S210 for determining whether a door-unlock signal γ from the manual transmitting-type radiowave key 240b is received. When the determination in Step 210 is YES, the process advances to Step S211 for unlocking the door, turning on the second relay switch 226 to supply power to the accessory group 227. If the determination in Step 210 is NO, the process returns to Step S206.

As above, this idling stop system can achieve the same effects in the first embodiment illustrated in FIG 3. In addition, the idling stop system is designed to turn on/off the power supply for the engine 210 through the first relay switch 224. This makes it possible to automatically stop the engine 210 at an adequate timing by turning off the power supply for the engine 210 (Step S205), and automatically start the engine 210 at an adequate timing by turning on the power supply for the engine 210 (Step S213).

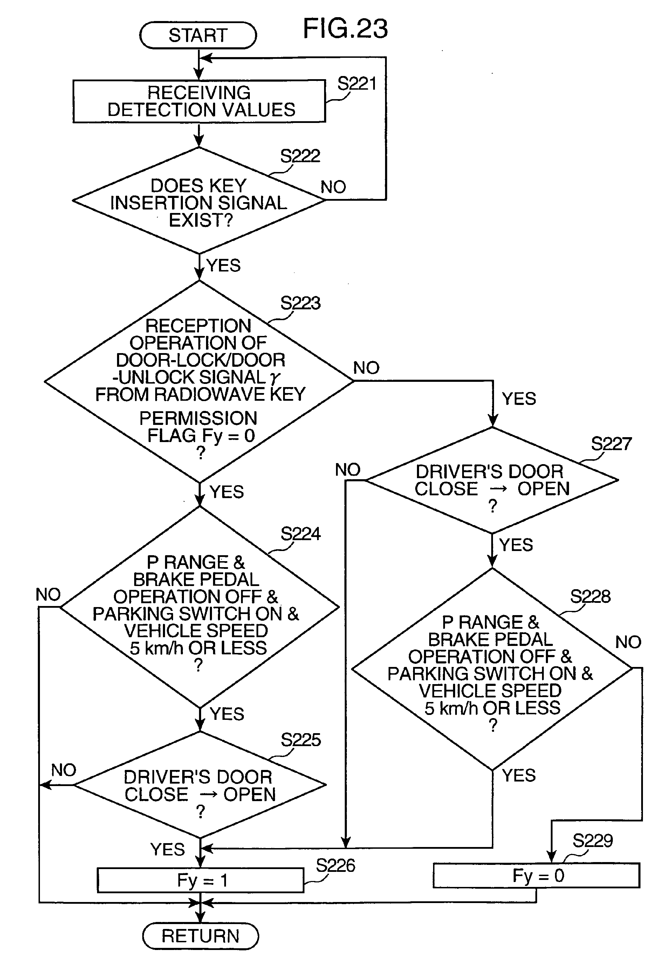

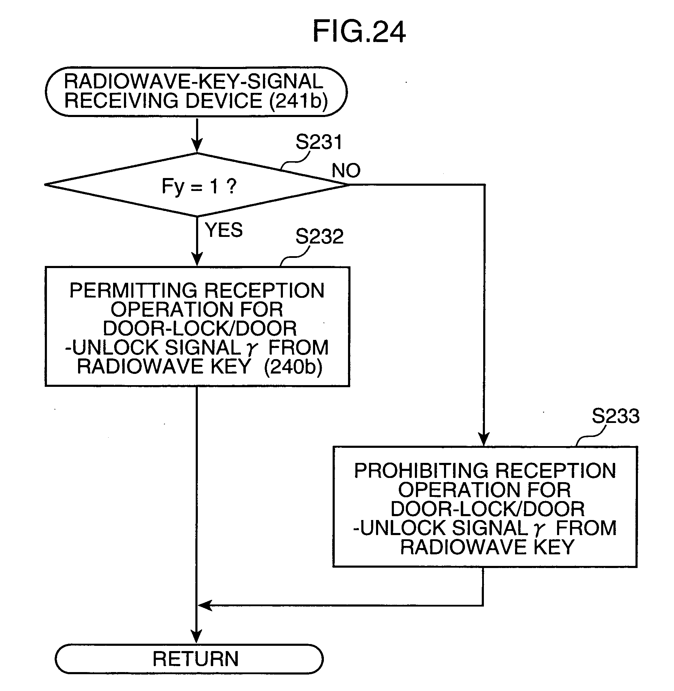

With reference to the flowcharts illustrated in FIGS. 23 and 24, a second idling stop control for the vehicle 2a in the fourth embodiment will be described below. Specifically, FIG 23 shows a process for setting an after-mentioned permission flag Fy in the vehicle 2b, which mainly corresponds to the appended claims 12 and 13. FIG 24 shows a process for an after-mentioned permission/prohibition control to be performed by the radiowave-key-signal receiving means based on the permission flag Fy, which mainly corresponds to the appended claims 9 and 10. In FIG 23, Steps S221, S222 and S224 to S229 are equivalent to Step S181, S182 and S184 to S189 in FIG 17. Thus, the description about these Steps will be omitted, and only Steps S223 as a feature in FIG 23 and Step S231 to S233 in FIG 24 will be described below.

When the determination in Step S222 is YES or it is determined that a key insertion signal exists, the process advances to Step S223 for determining whether a flag Fy representing either one of permission and prohibition of an operation for receiving a door-lock/unlock signal to be transmitted from the radiowave key or manual transmitting-type switch operation-based radiowave key 240b (the receiving operation is performed by the radiowave-key-signal receiving device 241b, as mentioned above) is reset to zero. As with the flag Fy in the third embodiment, the flag Fy is set to zero when the hard key is inserted into the key cylinder, and the driver sits on the driver seat, and set to 1 when the hard key is left in the key cylinder and the driver gets out of the vehicle 2b or does not sit on the driver seat.

Referring to FIG. 24, in Step S231, the radiowave-key-signal receiving device 241b checks the value of the flag Fy. If the flag Fy has a value of 1, or when the hard key is left in the key cylinder and the driver gets out of the vehicle 2b or does not sit on the driver's seat, Step S232 will be executed. If the flag Fy has a value of zero, or when the hard key is left in the key cylinder and the driver gets on the vehicle 2b or sits on the driver's seat, Step S233 will be executed.

In Step S232, the receiving operation for the door-lock/door-unlock signal γ (see FIG 20) transmitted from the manual radiowave key 240b (this operation is performed by the radiowave-key-signal receiving device 241b itself, as mentioned above), is permitted. Thus, it is permitted to execute the door lock/unlock control and the automatic engine stop process in response to the door-lock/door-unlock signal γ from the manual radiowave key 240b.

In Step S233, the reception operation for the door-lock/door-unlock signal γ (see FIG 20) transmitted from the manual radiowave key 240b (this operation is also performed by the radiowave-key-signal receiving device 241b itself, as mentioned above), is prohibited. Thus, it is prohibited to execute the door lock/unlock control and the automatic engine stop process in response to the door-lock/door-unlock signal γ from the manual radiowave key 240b.

For example, the control illustrated in FIG 22 is configured such that the door is locked, and the first relay switch 224 is turned off to automatically stop the engine 210, in Step S209. During this process, in Step S208 just before Step S209, it is determined whether the door-lock/door-unlock signal γ from the manual radiowave key 240b is received. When the determination in Step S208 is YES or it is determined that the door-lock/door-unlock signal γ is received, the process advances to Step S209. In other words, the determination in Step S208 is made on the premise that the radiowave-key-signal receiving device 241b receives the door-lock/door-unlock signal γ. Thus, only if the reception operation of the signal γ is permitted, the determination in Step S208 can be validly made to allow the door lock/unlock control and the automatic engine stop process in Step S209 to be executed effectively and advantageously. Conversely, when the reception operation (receiving operation) for the door-lock/door-unlock signal γ from the manual radiowave key 240b is prohibited, the determination in Step S208 cannot be validly made (the determination itself cannot be made) so that the door lock/unlock control and the automatic engine stop process in Step S209 are prohibited (become inexecutable).

As another example, the control illustrated in FIG 22 is configured such that the door is unlocked in Step S211 and then the first relay switch 224 is turned on to automatically start the engine 210, in step S213. During this process, in Step S210 just before Step S211, it is determined whether the door-lock/door-unlock signal γ from the manual radiowave key 240b is received. If the determination in Step S210 is YES or it is determined that the signal γ is received, the process can advance to Step S211 and S213. In other words, the determination in Step S210 is also made on the premise that the radiowave-key-signal receiving device 241b receives the door-lock/door-unlock signal γ. Thus, only if the reception operation (receiving operation) for the door-lock/door-unlock signal γ is permitted, the determination in Step S210 can be validly made to allow the door unlock control in Step S111 and the automatic engine start process in Step S213 to be executed effectively and advantageously. Conversely, when the reception operation (receiving operation) for the door-lock/door-unlock signal γ in the manual radiowave key 240b is prohibited, the determination in Step S210 cannot be validly made (the determination itself cannot be made) so that the door unlock control in Step S211 and the automatic engine start process in Step S213 are prohibited (become inexecutable).

As above, the door lock/unlock control and the automatic engine stop process in response to the door-lock/door-unlock signal γ are prohibited (Fx = 0: Step S233) when the hard key (engine start key) other than the manual radiowave key 240b is inserted into the key cylinder (YES in Step S222) and the driver sits on the driver's seat or is in the vehicle (in the period from the determination of NO in Step S228 until the determination of YES in Step S225). Thus, the problem in the conventional control designed to execute the automatic engine stop/start processes in conjunction with the door-lock/door-unlock signal γ of the manual radiowave key 240b, or the problem about improper execution of the door lock/unlock control and/or the automatic engine stop/start processes can be reliably avoided.

Particularly, in the above system using the manual transmitting-type radiowave key 240b as in the fourth embodiment, the driver or another occupant is likely to operate the radiowave key 240b erroneously and unintentionally. However, the above control can reliably prevent the improper execution of the door lock/unlock control and/or the automatic engine stop/start processes which would otherwise occur in the conventional system.

Further, the determination of whether the driver sits on the driver's seat (see Step S224 and S228) can be made using existing or commonly-used in-vehicle sensors (the inhibitor switch 54, the brake pedal switch 51, the parking brake switch 55, the vehicle speed sensor 53, etc.) without additional new sensors, or increase in cost, so as to determine whether the driver is in the vehicle, adequately, accurately and reasonably at low cost.

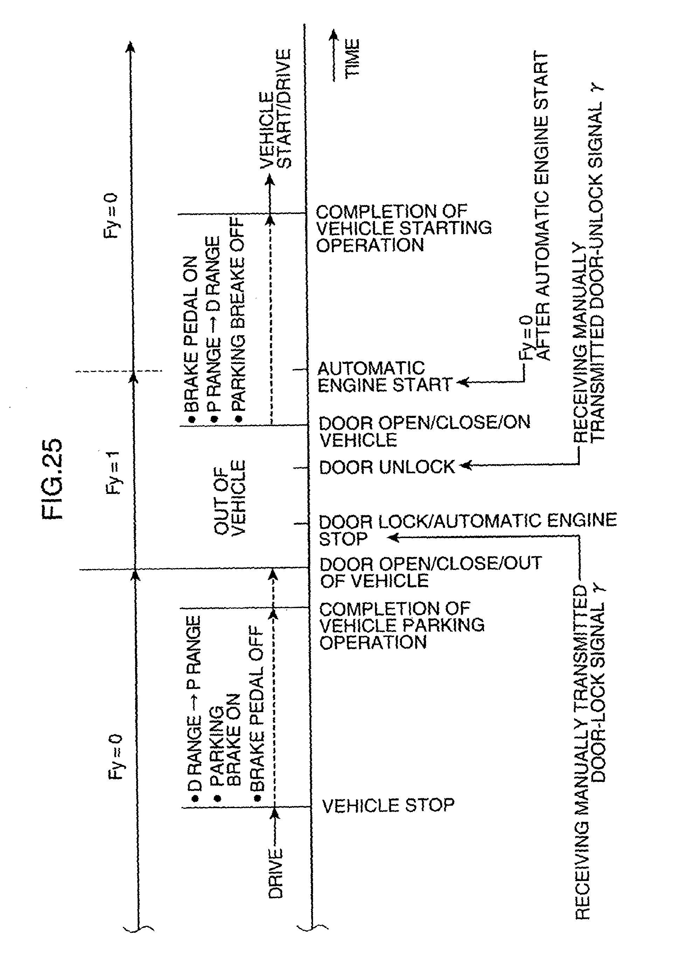

FIG. 25 is a time chart showing changes in the flag Fy in the second idle stop control in the fourth embodiment. When the driver opens/closes the door to get out of the vehicle after stopping the vehicle 2b and complete required procedure for parking, the flag Fy is shifted to 1. Then, in response to the reception operation (receiving operation) for the lock signal γ transmitted from the manual radiowave key 240b (Step S208), the door lock control and the automatic engine stop process are executed (Step S209). Subsequently, when the driver gets back to the vicinity of the vehicle 2b, the door unlock control is executed (Step S211) in response to the reception operation (receiving operation) for the unlock signal γ transmitted from the manual radiowave key 240b (Step S210). Then, when the driver performs some operation to satisfy any one of the conditions in Step S228 after opening/closing the door to get on the vehicle, the flag Fy is changed from 1 to zero. Each of the above conditions corresponds to the driver's vehicle-start intent. Thus, the automatic engine start process is executed (Step S213). That is, the change of the flag Fx from 1 to zero occurs after the automatic engine start process is adequately completed. Then, the driver completes required procedure for vehicle start, and then starts/drives the vehicle 2a.

In FIG. 25, the automatic engine stop condition may be only a combination of the shifting from the D range to the P range and the turning-on of the parking brake switch. The automatic engine start condition may be only the turning-on of the parking brake switch when the shift lever is in the P range. In FIG. 25, the engine power supply is turned off in conjunction with lock of the door, and the engine power supply is turned on in conjunction with unlock of the door.

In summary, according to an aspect of the present invention, there is provided a vehicle control system which includes: idling stop control means for automatically stopping an engine of a vehicle when a given automatic engine stop condition is satisfied, and then automatically starting the engine when a given automatic engine start condition is satisfied; receiving means for receiving a door-lock signal and a door-unlock signal from a radiowave transmitting key adapted to be used in a portable manner by a driver; and door lock means for locking and unlocking a door of the vehicle, in response, respectively, to the door-lock and door-unlock signals received by the receiving means. The vehicle control system comprises vehicle-start-intent detecting means for detecting a signal based on a driver's intent to start the vehicle except for the door-unlock signal received from the radiowave transmitting key in a period where the engine is automatically stopped by the idling stop control means. In this vehicle control system, the idling stop control means is operable to automatically stop the engine in accordance with the door-lock signal from the radiowave transmitting key, and to automatically start the engine when the vehicle-start-intent detecting means detects the vehicle-start-intent-based signal.

In the above vehicle control system, for example, when a driver of a vehicle, such as a delivery vehicle carries a pack to a customer, the driver can get out of the vehicle without an operation for turning off the engine, and simply transmit the door-lock signal from the radiowave transmitting key to lock the door and automatically stop the engine. This makes it possible to provide a higher level of convenience and achieve improved fuel economy, lowered emissions and reduced noise/vibration based on the idling stop control. Further, even if the driver tries to unlock the door in accordance with the door-unlock signal from the radiowave transmitting key when he/she gets back to the vehicle after the delivery, the above vehicle control system is designed such that the engine cannot be automatically started only by the door-unlock signal from the radiowave transmitting key. The reason is that the driver can get back to the vehicle without intent to start the vehicle, for example, simply to pick up another pack. Thus, the above vehicle control system is designed to continue the automatic engine stop state regardless of receiving the door-unlock signal from the radiowave transmitting key so as to achieve improvement in fuel economy and other effects. In addition, the above vehicle control system is designed to allow the engine to be automatically started only after detection of the signal representing a driver's intent to start the vehicle except for the door-unlock signal from the radiowave transmitting key. This makes it possible to reliably synchronize the vehicle-start intent with the release of the automatic engine stop state. The signal representing the driver's intent to start the vehicle may include an ON signal of a brake pedal switch, an ON signal of a seat belt switch, and a brake release signal.

According to another aspect of the present invention, the vehicle control system further includes power-supply control means for turning off and on each of an engine power supply and an accessory power supply of the vehicle, in response, respectively, to the door-lock and door-unlock signals received from the radiowave transmitting key.

This vehicle control system is designed to turn off the power supply for the accessory, such as an audio device, a power window device or a motor for an oil pump, in response to the door-lock signal received from the radiowave transmitting key. This makes it possible to omit an additional operation for turning off the power supply so as to provide a higher level of convenience, and prevent a useless power consumption due to neglect of turning off the power supply. This vehicle control system is also designed to turn on the power supply in response to the door-unlock signal. Thus, an operation for turning on the power supply can be omitted to provide a higher level of convenience. Particularly, in a vehicle equipped with an automatic transmission designed such that a motor for an oil pump is driven to increase an oil pressure up to a specified value required for actuating friction elements thereof, the motor may be driven in response to the door-unlock signal from the radiowave transmitting key to increase the oil pressure before engine start so as to provide an enhanced engine start performance.

Further, this vehicle control system is designed to turn on/off the power supply for the engine in conjunction with the on-off control of the accessory power supply. This makes it possible to achieve the automatic engine stop (when the engine power supply is turned off) and the preparation for the automatic engine start (when the engine power supply is turned on) at an adequate timing.

According to another aspect of the present invention, the vehicle control system further includes: a transmission mechanism operable to change an engagement state of a plurality of hydraulically-actuated friction elements so as to shift between a plurality of transmission gear ratio; shift lock means for prohibiting a shift lever of the vehicle from being shifted from a parking range to any one of the remaining ranges; and shift-lock release means for allowing the shift lever to be released from the prohibition of shifting based on the shift lock means, in response to the operation of a braking device of the vehicle by the driver. In this vehicle control system, the vehicle-start-intent detecting means is operable to detect a signal representing the operation of the braking device performed in the period where the engine is automatically stopped; and the idling stop control means is operable to automatically start the engine when the vehicle-start-intent detecting means detects the braking-device operation signal.

This vehicle control system is designed to automatically start the engine upon satisfaction of the conditions that a braking device is operated during stop of the engine, and the shift lever is released from the prohibition of shifting based on the shift lock means. Thus, the driver's vehicle-start intent can be adequately figured out to automatically start the engine in early stage and smoothly start the vehicle. This can eliminate the risk that the driver feels a response delay during vehicle start.

More specifically, when a brake pedal is depressed in a specified value or more, the shift lock means releases the prohibition of shifting from the parking range to one of the remaining ranges (e.g. a running range, such as D range) to allow the shift lever to be shifted from the parking range to one of the remaining ranges. The driver's vehicle-start intent can be clearly recognized based on the specified value or more of depression of the brake pedal. Thus, when the driver depresses the brake pedal in a specified value or more (i.e. depresses the brake pedal to the extent capable of releasing the action of the shift lock means), the engine is automatically started. That is, the driver's actions of depressing the brake pedal in a specified value or more, shifting the shift lever to the running range, and depressing an accelerator pedal instead of the brake pedal, provides an enough time for allowing the oil pimp to be fully driven so as to sufficiently increase a hydraulic oil pressure. This makes it possible to adequately actuate the hydraulically-actuated friction elements so as to reliably obtain a desired connection between power transmission lines and a desired transmission gear ratio to achieve a smooth vehicle start.

According to another aspect of the present invention, the vehicle control system further includes headlight-state detecting means for detecting an ON or OFF state of a headlight of the vehicle. In this vehicle control system, the idling stop control means is adapted to avoid automatically stopping the engine during the ON state of the headlight, regardless of receiving the door-lock signal from the radiowave transmitting key.

If the idling stop control (automatic engine stop process) is executed in the ON state of the headlight, the battery is likely to be excessively consumed due to relatively large power consumption of the headlight. Thus, during the ON state of the headlight, an alternator can be preferentially driven by the engine without executing the idling stop control (automatic engine stop process) to generate electric power so as to ensure an adequate stored power of the battery. On the other hand, during the ON state of a small light, such as a hazard flasher, having relatively low power consumption or less adverse affect on drain of the battery, the idling stop control (automatic engine stop process) may be executed to achieve improved fuel economy, lowered emissions and reduced noise/vibration.

According to another aspect of the present invention, the vehicle control system further includes headlight-state detecting means for detecting an ON or OFF state of a headlight of the vehicle. In this vehicle control system, the idling stop control means is operable, in response to receiving the door-lock signal from the radiowave transmitting key during the ON state of the headlight, to turn off the headlight and automatically stop the engine

This vehicle control system is designed to turn off the headlight and automatically stop the engine (these controls may be executed in any order) in response to receiving the door-lock signal from the radiowave transmitting key during the ON state of the headlight. This makes it possible to execute the idling stop control (automatic engine stop process) while preventing runout of the battery. The term "receiving the door-lock signal from the radiowave transmitting key" as described herein, may be replaced with "upon satisfaction of the automatic engine stop condition".

The above vehicle control system may further include headlight-state detecting means for detecting an ON or OFF state of a small light of the vehicle. In this case, the idling stop control means may be operable, in response to receiving the door-lock signal from the radiowave transmitting key during the ON state of both the headlight and small light, to turn off only the headlight and automatically stop the engine, and, in response to receiving the door-lock signal from the radiowave transmitting key during the ON state of only the small light, to automatically stop the engine without turning off the small light.

This vehicle control system is designed to turn off only the headlight and automatically stop the engine (these controls may be executed in any order) when the door-lock signal from the radiowave transmitting key is received during the ON state of both the headlight and small light, and to automatically stop the engine without turning off the small light when the door-lock signal from the radiowave transmitting key is received during the ON state of only the small light. This makes it possible to execute the idling stop control (automatic engine stop process) while minimizing runout of the battery, and avoid the occurrence of uncomfortable feel and/or inconvenience (particularly, in dark surroundings) due to the turning-off of all lights of the vehicle enforcedly executed independently of driver's intent. The term "receiving the door-lock signal from the radiowave transmitting key" as described herein two times, may also be replaced with "upon satisfaction of the automatic engine stop condition".

According to another aspect of the present invention, the vehicle control system further includes stored-power detecting means for detecting a stored power of a battery of the vehicle. In this vehicle control system, the idling stop control means is adapted to avoid automatically stopping the engine when the stored power of the battery is equal to or less than a specified value, regardless of receiving the door-lock signal from the radiowave transmitting key.

In this vehicle control system, when the stored battery power is equal to or less than a specified value, an alternator can be preferentially driven by the engine without executing the idling stop control (automatic engine stop process) to generate electric power so as to ensure an adequate stored power of the battery.

In cases where the idling stop control means avoids automatically stopping the engine regardless of receiving the door-lock signal from the radiowave transmitting key, the vehicle control system may further include informing means operable to inform the driver of the fact.

This vehicle control system is designed to inform the driver of the fact that the engine cannot be automatically stopped. This makes it possible to give information about inexecutability of the automatic engine stop process to the driver, and prompt the driver to stop the engine, where needed, through the operation of an ignition key, or the push-"off" operation for manually stopping an engine in the engine start/stop button. Thus, an adequate stored power of the battery can be ensured, and a useless driving of the engine can be avoided.

According to another aspect of the present invention, the vehicle control system further includes: either one of hard-key-insertion detecting means for detecting that an additional hard key other than the radiowave transmitting key is inserted into a key cylinder of the vehicle, and manual engine-start/stop operation means adapted to manually start and stop the engine without using the hard key; driver's sitting detecting means for detecting that the driver sits on a driver seat of the vehicle; prohibition means operable, in response to a signal representing the driver's sitting on the driver seat detected by the driver's sitting detecting means, and a signal representing either one of the insertion of the additional key detected by the hard-key-insertion detecting means and the engine start operation in the manual engine-start/stop operation means, to prohibit the door lock means from locking and unlocking the door, in response, respectively, to the door-lock and door-unlock signals from the radiowave transmitting key, and prohibit the idling stop control means from automatically stopping the engine in response to the door-lock signal from the radiowave transmitting key.

This vehicle control system is designed to prohibit the door lock/unlock control and the automatic engine stop process in accordance with the door-lock and/or door-unlock signals from the radiowave transmitting key, when the additional hard key (engine starting key) other than the radiowave transmitting key is inserted into the key cylinder, or the manual engine-start/stop operation means (for example, the aforementioned engine start/stop button designed to manually start an engine when being turned "on" in response to a pushing operation, and to manually stop the engine when being turned "off" in response to a subsequent re-pushing operation) is operated to start the engine, and when the driver sits on the driver seat, or the driver is in the vehicle. Thus, the aforementioned problem in the conventional automatic engine stop/start control designed to be executed in conjunction with the door lock/unlock control in response to the door-lock/door-unlock signals from the radiowave transmitting key, or a problem about the occurrence of improper lock/unlock of the door or improper automatic stop of the engine, can be reliably avoided.

Conversely, this vehicle control system is designed to allow the door lock/unlock control and the automatic engine stop process in accordance with the door-lock and/or door-unlock signals from the radiowave transmitting key, when the driver does not sit on the driver's seat, or the driver gets out of the vehicle, even if the hard key is still inserted into the key cylinder, or the manual engine-start/stop operation means is still in the "on" state for allowing engine operation (i.e. the push-"off" operation for stopping the engine has not been performed).

According to another aspect of the present invention, the vehicle control system further includes transmitting means for transmitting a given request signal to the radiowave transmitting key. In this vehicle control system, the radiowave transmitting key is operable to transmit a given authentication signal to the receiving means in response to the request signal from transmitting means; the receiving means is operable to authenticate the validity of the received authentication signal, and when the authentication signal is valid, to allow the door lock means to lock and unlock the door and allow the idling stop control means to automatically stop the engine; and the prohibition means is operable to prohibit the transmitting means from transmitting the request signal to the radiowave transmitting key and/or prohibit the receiving means from authenticating the validity of the received authentication signal, so as to prohibit the door lock means from locking and unlocking the door and prohibit the idling stop control means from automatically stopping the engine.

This vehicle control system is designed to perform a specific prohibition action in the prohibition means in the case where the radiowave transmitting key is a type adapted to automatically transmitting its own authentication signal to the receiving means of the vehicle. That is, the prohibition means is operable to prohibit the transmitting means from transmitting the request signal to the radiowave transmitting key and/or prohibit the receiving means from authenticating the validity of the received authentication signal. This makes it possible to reliably prevent the occurrence of improper lock/unlock of the door or improper automatic stop of the engine to be caused, for example, by erroneous authentication of an authentication signal, when the driver is in the vehicle, and reduce an unnecessary consumption of a battery for the radiowave transmitting key.

In the above vehicle control system, the radiowave transmitting key may be adapted to transmit the door-lock and door-unlock signals to the receiving means through a manual operation. In this case, the receiving means may be operable, in response to receiving the door-lock and door-unlock signals from the radiowave transmitting key, to allow the door lock means to lock and unlock the door, and in response to receiving the door-lock signal from the radiowave transmitting key, to allow the idling stop control means to automatically stop the engine, and the prohibition means may be operable to prohibit the receiving means from receiving the door-lock and door-unlock signals from the radiowave transmitting key, so as to prohibit the door lock means from locking and unlocking the door and prohibit the idling stop control means from automatically stopping the engine.

This vehicle control system is designed to perform a specific prohibition action in the prohibition means in the case where the radiowave transmitting key is a type adapted to manually transmitting the door-lock and door-unlock signals to the receiving means of the vehicle. That is, the prohibition means is operable to prohibit the receiving means from receiving the door-lock and door-unlock signals from the radiowave transmitting key. This makes it possible to reliably prevent the occurrence of improper lock/unlock of the door or improper automatic stop of the engine when the driver is in the vehicle.

In the above vehicle control system, the driver's sitting detecting means may be operable, in a state after a driver's door is opened and closed under the following vehicle conditions: (i) the shift lever is in the parking range, (ii) no braking device is operated except for a parking brake, and (iii) a vehicle speed is equal to or less than a specified value, to determine that the driver is sit on the driver's seat, when the vehicle conditions is changed to at least one of the following vehicle conditions: (iv) the shift lever is shifted from the parking range to one of the remaining ranges; (v) the braking device other than the parking brake is operated; and (vi) the vehicle speed becomes greater than the specified value.

In the above vehicle control system, the driver's sitting detecting means may be operable to determine that no driver is sit on the driver's seat, when a driver's door is opened and closed, in the state after at least one of the following vehicle conditions: (i) the shift lever is in one of the ranges other than a parking range; (ii) a braking device other than the parking brake is operated; and (iii) a vehicle speed is greater than a specified value, is changed to the following conditions: (iv) the shift lever is in the parking range; (v) no braking device is operated except for the parking brake; and (vi) the vehicle speed is equal to or less than the specified value.

Each of the above two vehicle control systems is designed to perform a specific determination action in the driver's sitting detecting means. This makes it possible to determine whether the driver is in the vehicle, by use of existing commonly-used switches of the vehicle without new additional sensors or increase in cost. Thus, the determination can be performed adequately, accurately and reasonably at a low cost. The term "driver's door is opened and closed" herein means not only a continuous operation for opening and then closing the driver's door, or closing and then opening the driver's door, but also an operation for opening the closed driver's door, or closing the opened driver's door.

As mentioned above, the present invention provides a vehicle control system with an idling stop control function capable of automatically stopping and starting an engine in an effective manner to achieve improvement in fuel economy and reduction in emissions/noise. The vehicle control system of the present invention can be widely used in the field of environmental/low-emission technologies for vehicles.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A vehicle control system comprising:
idling stop control means for automatically stopping an engine of a vehicle when a given automatic engine stop condition is satisfied, and then automatically starting said engine when a given automatic engine start condition is satisfied;
receiving means for receiving a door-lock signal and a door-unlock signal from a radiowave transmitting key adapted to be used in a portable manner by a driver; and
door lock means for locking and unlocking a door of the vehicle, in response, respectively, to said door-lock and door-unlock signals received by said receiving means,
said vehicle control system being **characterized by** comprising vehicle-start-intent detecting means for detecting a signal based on a driver's intent to start the vehicle except for the door-unlock signal received from said radiowave transmitting key in a period where the engine is automatically stopped by said idling stop control means, wherein said idling stop control means is operable to automatically stop the engine in accordance with the door-lock signal from said radiowave transmitting key, and to automatically start said engine when said vehicle-start-intent detecting means detects said vehicle-start-intent-based signal.

2. The vehicle control system as defined in claim 1, further comprising power-supply control means for turning off and on each of an engine power supply and an accessory power supply of the vehicle, in response, respectively, to the door-lock and door-unlock signals received from said radiowave transmitting key.

3. The vehicle control system as defined in claim 1 or 2, further comprising:
a shifting mechanism operable to change an engagement state of a plurality of hydraulically-actuated friction elements so as to shift between a plurality of transmission gear ratio;
shift lock means for prohibiting a shift lever of the vehicle from being shifted from a parking range to any one of the remaining ranges; and
shift-lock release means for allowing said shift lever to be released from the prohibition of shifting based on said shift lock means, in response to the operation of a braking device of the vehicle by the driver,
wherein:
said vehicle-start-intent detecting means is operable to detect a signal representing the operation of said braking device performed in said period where the engine is automatically stopped; and
said idling stop control means is operable to automatically start said engine when said vehicle-start-intent detecting means detects said braking-device operation signal.

4. The vehicle control system as defined in any one of claims 1 to 3, further comprising: headlight-state detecting means for detecting an ON or OFF state of a headlight of the vehicle, wherein said idling stop control means is adapted to avoid automatically stopping the engine during the ON state of said headlight, regardless of receiving the door-lock signal from said radiowave transmitting key.

5. The vehicle control system as defined in any one of claims 1 to 3, further comprising: headlight-state detecting means for detecting an ON or OFF state of a headlight of the vehicle, wherein said idling stop control means is operable, in response to receiving the door-lock signal from said radiowave transmitting key during the ON state of said headlight, to turn off said headlight and automatically stop the engine

6. The vehicle control system as defined in claim 5, further comprising: headlight-state detecting means for detecting an ON or OFF state of a small light of the vehicle, wherein said idling stop control means is operable, in response to receiving the door-lock signal from said radiowave transmitting key during the ON state of both said headlight and small light, to turn off only said headlight and automatically stop the engine, and, in response to receiving the door-lock signal from said radiowave transmitting key during the ON state of only said small light, to automatically stop the engine without turning off said small light.

7. The vehicle control system as defined in any one of claims 1 to 6, further comprising: stored-power detecting means for detecting a stored power of a battery of the vehicle, wherein said idling stop control means is adapted to avoid automatically stopping the engine when the stored power of said battery is equal to or less than a specified value, regardless of receiving the door-lock signal from said radiowave transmitting key.

8. The vehicle control system as defined in claims 4 or 7, further comprising informing: means operable, when said idling stop control means avoids automatically stopping the engine regardless of receiving the door-lock signal from said radiowave transmitting key, to inform the driver of said fact.

9. The vehicle control system as defined in any one of claims 1 to 8, further comprising:
either one of:
hard-key-insertion detecting means for detecting that an additional hard key other than said radiowave transmitting key is inserted into a key cylinder of the vehicle, and
manual engine-start/stop operation means adapted to manually start and stop the engine without using said hard key;
driver's sitting detecting means for detecting that the driver sits on a driver seat of the vehicle; and
prohibition means operable, in response to a signal representing the driver's sitting on the driver seat detected by said driver's sitting detecting means, and a signal representing either one of the insertion of said additional key detected by said hard-key-insertion detecting means and the engine start operation in said manual engine-start/stop operation means, to prohibit said door lock means from locking and unlocking the door, in response, respectively, to the door-lock and door-unlock signals from said radiowave transmitting key, and prohibit said idling stop control means from automatically stopping the engine in response to the door-lock signal from said radiowave transmitting key.

10. The vehicle control system as defined in claim 9, further comprising transmitting means for transmitting a given request signal to said radiowave transmitting key, wherein:
said radiowave transmitting key is operable to transmit a given authentication signal to said receiving means in response to said request signal from transmitting means;
said receiving means is operable to authenticate the validity of said received authentication signal, and when said authentication signal is valid, to allow said door lock means to lock and unlock the door and allow said idling stop control means to automatically stop the engine; and
said prohibition means is operable to prohibit said transmitting means from transmitting the request signal to said radiowave transmitting key and/or prohibit said receiving means from authenticating the validity of the received authentication signal, so as to prohibit said door lock means from locking and unlocking the door and prohibit said idling stop control means from automatically stopping the engine.

11. The vehicle control system as defined in claim 9, wherein said radiowave transmitting key is adapted to transmit the door-lock and door-unlock signals to said receiving means through a manual operation, wherein;
said receiving means is operable, in response to receiving said door-lock and door-unlock signals from said radiowave transmitting key, to allow said door lock means to lock and unlock the door, and in response to receiving said door-lock signal from said radiowave transmitting key, to allow said idling stop control means to automatically stop the engine; and
said prohibition means is operable to prohibit said receiving means from receiving said door-lock and door-unlock signals from said radiowave transmitting key, so as to prohibit said door lock means from locking and unlocking the door and prohibit said idling stop control means from automatically stopping the engine.

12. The vehicle control system as defined in any one of claims 9 to 11, wherein said driver's sitting detecting means is operable, in a state after a driver's door is opened and closed under the following vehicle conditions: (i) said shift lever is in the parking range, (ii) no braking device is operated except for a parking brake, and (iii) a vehicle speed is equal to or less than a specified value, to determine that the driver is sit on said driver's seat, when said vehicle conditions is changed to at least one of the following vehicle conditions: (iv) said shift lever is shifted from the parking range to one of the remaining ranges; (v) the braking device other than the parking brake is operated; and (vi) the vehicle speed becomes greater than said specified value.

13. The vehicle control system as defined in any one of claims 9 to 11, wherein said driver's sitting detecting means is operable to determine that no driver is sit on said driver's seat, when a driver's door is opened and closed, in the state after at least one of the following vehicle conditions: (i) said shift lever is in one of the ranges other than a parking range; (ii) a braking device other than the parking brake is operated; and (iii) a vehicle speed is greater than a specified value, is changed to the following conditions: (iv) said shift lever is in the parking range; (v) no braking device is operated except for the parking brake; and (vi) the vehicle speed is equal to or less than said specified value.
